# EUROPÄISCHE PATENTSCHRIFT

(11) **EP 1 552 676 B1**
(45) Veröffentlichungstag und Bekanntmachung des Hinweises auf die Patenterteilung: **04.04.2012**
(21) Anmeldenummer: 04713030.7
(22) Anmeldetag: 20.02.2004
(51) Int. Cl.: H04M 3/53, H04M 3/537

(54) **VERFAHREN SOWIE MULTIMEDIANACHRICHTENZENTRUM ZUM ZUSTELLEN EINER MULTIMEDIANACHRICHT**
METHOD AND MULTIMEDIA MESSAGE CENTER FOR DELIVERING A MULTIMEDIA MESSAGE
PROCEDE ET CENTRE DE MESSAGERIE MULTIMEDIA POUR REMETTRE UN MESSAGE MULTIMEDIA

(30) Priorität: 20.02.2003 DE 10307276
(43) Veröffentlichungstag der Anmeldung: 13.07.2005
(73) Patentinhaber: SIEMENS AKTIENGESELLSCHAFT, 80333 München (DE)
(72) Erfinder: BECKER, Thomas, D-59755 Arnsberg (DE); GEIGER, Jan-Christoph, D-44795 Bochum (DE); GOERTZ, Werner, D-46282 Dorsten (DE); HELING, Guido, D-44263 Dortmund (DE); MROS, Peter, D-44579 Castrop-Rauxel (DE); NIEDER, Stefan, D-46419 Isselburg (DE); RATERMANN, Albert, 58452 Witten (DE); WILLEMSEN, Stanislaus, NL-7091 XB Dinxperlo (NL); VAN DE LOGT, Marco, D-47574 Goch (DE)
(86) Internationale Anmeldenummer: PCT/EP2004/001697
(87) Internationale Veröffentlichungsnummer: WO 2004/075523

(56) Entgegenhaltungen:
- EP-A- 0 831 633
- WO-A-01/33782

## Beschreibung

Die vorliegende Erfindung betrifft ein Verfahren zum Zustellen einer Multimedianachricht an ein als Multimedianachrichtensenke ausgebildetes Telekommunikationsgerät gemäß dem Oberbegriff des Patentanspruches 1, ein Multimedianachrichtenzentrum zum Zustellen einer Multimedianachricht an ein als Multimedianachrichtensenke ausgebildetes Telekommunikationsgerät gemäß dem Oberbegriff des Patentanspruches 15 sowie ein Telekommunikationsgerät zum Zugreifen auf bei einer Hinterlegungsstelle eines Multimedianachrichtendienstzentrums hinterlegte Multimedianachrichten gemäß dem Oberbegriff des Patentanspruches 28.

Aus der WO 01/33782 A1 ist ein Verfahren zur Implementierung eines MMS-Dienstes zwischen einem Mobilfunkgerät und einem MMS-Server bekannt, bei dem eine für das Mobilfunkgerät bestimmte Multimedianachricht mit zumindest einer Multimediakomponente im Server hinterlegt ist und für deren Abholung eine Notifizierungsnachricht mit Verweisinformationen auf die Multimediakomponenten von dem Server an das Mobilfunkgerät gesendet wird. Aufgrund der empfangenen Notifizierungsnachricht wählt das Mobilfunkgerät einen Übertragungsweg aus, über den die zu den Verweisinformationen korrespondierenden Multimediakomponenten zum Mobilfunkgerät übertragen werden.

Aus der EP 0831633 A1 ist ein Verfahren zum Informieren eines Benutzers über vorliegende Nachrichten, die in einem Nachrichtenspeichermittel gespeichert sind, bekannt, bei dem ein Verriegelungssystems überwacht wird und eine automatische Kontaktaufnahme mit dem Benutzer durch Anrufen und dessen Anrufannahme zwecks Übermittlung von Informationen, die die vorliegende Nachrichten betreffen, und Abspielens der vorliegenden Nachricht(en) erfolgt, wenn festgestellt worden ist, dass der Benutzer das Verriegelungssystem aktiviert hat.

Das Übertragen (Senden und Empfangen) von Servicenachrichten an ein Telekommunikationsgerät - beispielsweise ein Mobiltelefon (Handy), ein Schnurlostelefon bestehend aus einer Basisstation sowie mindestens einem Mobilteil, ein Festnetztelefon, ein Fax-Gerät, einen Personal Computer etc. - und umgekehrt von dem Telekommunikationsgerät ist ein Kommunikationsdienst, der bezüglich der mit den Nachrichten übertragenen Informationsinhalten, wie z.B. Texte, multimediale Inhalte wie z.B. Audio-/Videodaten (Tonrufe, Bildschirmschoner), Grafiken, Programme etc., zu unterscheiden ist und der zunächst im Mobilfunkbereich Einzug gehalten hat und aufgrund der großen Akzeptanz sich mittlerweile auch nach und nach im Festnetzbereich etabliert. Von der Vielzahl der im Mobilfunknetz angebotenen Dienste - wie z.B. dem "Short Message (Messaging) Service (SMS)", dem "Enhanced Message (Messaging) Service (EMS)", dem "Multimedia Message (Messaging) Service (MMS)", dem "Instant Messaging", der "Over The Air Activation (OTA)", dem "E-Mail" etc. - scheint im Festnetz wie im Mobilfunkbereich die Entwicklung derzeit dahin zu gehen, dass insbesondere der SMS- und MMS-Kommunikationsdienst eine größere Rolle spielen werden. Während der SMS-Dienst sowohl für den Mobilfunkbereich als auch für den Festnetzbereich bereits standardisiert ist (für GSM: ETSI TS 100 942 V7.0.0, Release 1998; für ISDN/PSTN: ETSI ES 201 912 V1.1.1, Release 01/2002) gilt für den MMS-Dienst Gleiches nur für den Mobilfunkbereich (vgl.: 3GPP TS 22.140 V4.y.z; stage 1 and 2; Release 4), wohingegen im Festnetzbereich derzeit Standardisierungsaktivitäten laufen (vgl.: ETSI DES/AT-030023 VO.1.0, 11/2003).

Der SMS-Dienst im Fest- und Mobilnetz ist ein Punkt-zu-Punkt-Dienst und zeichnet sich durch eine reine Push-Funktionalität aus - d.h. der Inhalt der Kurznachricht [Short Message (SM)], deren Länge maximal 160 Byte beträgt, wird vom Kurznachrichten-Servicezentrum bzw. Kurznachrichten-Dienstzentrum [Short Message Service Center (SMSC)] an das Telekommunikationsgerät gesendet und besteht in der Regel aus Textdaten -, wobei der Verbindungsaufbau vom Servicezentrum initiiert wird. Während der SMS-Dienst im Mobilfunkbereich zwischen dem Telekommunikationsgerät und dem Kurznachrichten-Servicezentrum verbindungslos abläuft, indem die Kurznachricht ohne Aufbau einer Nutzkanalverbindung über einen Signalisierungskanal übertragen wird, erfolgt der Ablauf des SMS-Dienstes im Festnetz verbindungsorientiert, indem eine Nutzkanalverbindung zwischen dem Telekommunikationsgerät und dem Kurznachrichten-Servicezentrum hergestellt wird und die Kurznachricht hierüber mittels der Realisierung des Dienstmerkmals "Calling Line Identification (CLI)", was als "Calling Line Identification Presentation (CLIP)" bezeichnet wird, durch ein FSK-und/oder DTMF-Signalisierung (Frequency Shift Keying bzw. Dual Tone Multiple Frequency) übermittelt wird.

Beim MMS-Dienst, der im Mobilfunknetz wie der SMS-Dienst verbindungslos über einen WAP-Transportweg (Nutzung des Wireless Application Protocol) abgewickelt wird, kommt im Festnetz hingegen ein anderer Mechanismus zum Tragen: Beim Versand einer Multimedianachricht [Multimedia Message (MM)], deren Größe im Prinzip unbegrenzt, aber derzeit auf ca. 10OkByte beschränkt ist und in der z.B. Texte, multimediale Inhalte wie z.B. Audio-/Videodaten (Tonrufe, Bildschirmschoner), Grafiken, Programme etc. kurzum Text-, Audio-und/oder Videodaten enthalten sein können, an das Telekommunikationsgerät wird zunächst wieder verbindungsorientiert eine Mitteilungsnachricht, die sogenannte MMS-Notification, verschickt, die das Telekommunikationsgerät darüber informiert, dass eine Multimedianachricht beim Multimedianachrichten-Servicezentrum bzw. Multimedianachrichten-Dienstzentrum [Multimedia Message Service Center (MMSC)] vorliegt. Dies geschieht über einen Push-Dienst, wie z.B. den SMS-Dienst. Anschließend muss, im Unterschied zum Empfang einer Kurznachricht, ein weiterer Verbindungsaufbau vom Telekommunikationsgerät zum Multimedianachrichten-Servicezentrum initiiert werden, um den Inhalt der Multimedianachricht zu erhalten.

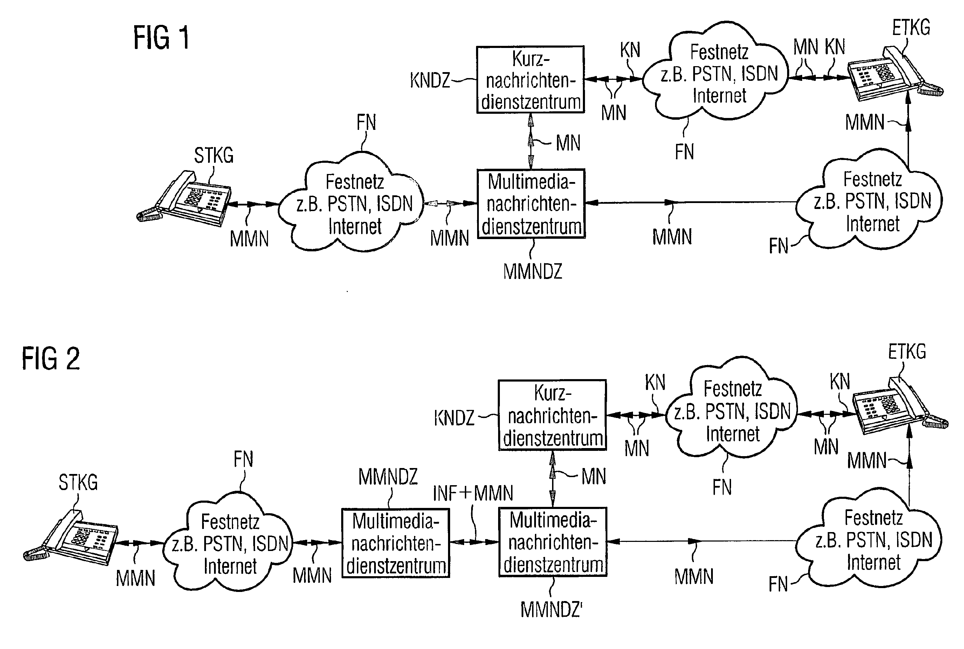

In den FIGUREN 1 und 2 ist dieser Sachverhalt - das Übertragen von Multimedianachrichten (Multimedia Messages MM) im Festnetz von einem Absender (Sendegerät) zu einem Adressaten (Empfangsgerät), bei dem jedes der Geräte üblicherweise bei nur einem einzigen Multimedianachrichtendienstzentrum (Multimedia Message Service Center MMSC) registriert ist, gemäß dem Stand der Technik - dargestellt. Es zeigen:
FIGUR 1 das Übertragen von Multimedianachrichten im Festnetz von einem Absender (Sendegerät) zu einem Adressaten (Empfangsgerät), wenn beide Geräte beim gleichen Multimedianachrichtendienstzentrum registriert sind,
FIGUR 2 das Übertragen von Multimedianachrichten im Festnetz von einem Absender (Sendegerät) zu einem Adressaten (Empfangsgerät), wenn beide Geräte bei unterschiedlichen Multimedianachrichtendienstzentren registriert sind.

FIGUR 1 zeigt die Übertragung einer Multimedianachricht MMN (Multimedia Message MM) im Festnetz FN von einem Sende-Telekommunikationsgerät STKG zu einem Empfangs-Telekommunikationsgerät ETKG, bei dem beide Geräte bei ein und demselben Multimedianachrichtendienstzentrum MMNDZ (Multimedia Message Service Center MMSC) registriert sind, das dem Festnetz FN zugeordnet ist. 'Zugeordnet' bedeutet dabei, dass das Multimedianachrichtendienstzentrum MMNDZ entweder Bestandteil des Festnetzes FN ist oder außerhalb des Festnetzes FN angeordnet ist. Die Registrierung des Sende-Telekommunikationsgerätes STKG bzw. des Empfangs-Telekommunikationsgerätes ETKG bei dem Multimedianachrichtendienstzentrum MMNDZ erfolgt durch das Einprogrammieren einer Empfangs- und Sendenummer des Dienstzentrums in das jeweilige Gerät. Dies geschieht entweder durch eine werksseitige Vorkonfiguration in dem jeweiligen Telekommunikationsgerät oder manuell durch den Benutzer des Gerätes oder durch eine spezielle Konfigurationsnachricht, die ein einziges Mal bei der Erstinbetriebnahme (Installation) des MMS-Dienstes z.B. über den SMS-Dienst von dem Multimedianachrichtendienstzentrum MMNDZ an das Sende-Telekommunikationsgerät STKG bzw. das Empfangs-Telekommunikationsgerät ETKG übertragen wird und mit der für die Installation des MMS-Dienstes notwendigen Daten dynamisch aufgespielt werden.

Die Übertragung der Multimedianachricht MMN beginnt zunächst damit, dass das Sende-Telekommunikationsgerät STKG die für das Empfangs-Telekommunikationsgerät ETKG bestimmte Multimedianachricht MMN über das Festnetz FN an das Multimedianachrichtendienstzentrum MMNDZ sendet. Um das Empfangs-Telekommunikationsgerät ETKG darüber zu informieren, dass im Multimedianachrichtendienstzentrum MMNDZ die für das Empfangs-Telekommunikationsgerät ETKG bestimmte Multimedianachricht MMN eingetroffen ist, sendet das Multimedianachrichtendienstzentrum MMNDZ eine Mitteilungsnachricht MN an ein Kurznachrichtendienstzentrum KNDZ (Short Message Service Center SMSC), das als Überbringer der Information für das Empfangs-Telekommunikationsgerät ETKG wie das Multimedianachrichtendienstzentrum MMNDZ dem Festnetz FN zugeordnet ist. Das Kurznachrichtendienstzentrum KNDZ fügt die empfangene Mitteilungsnachricht MN in eine Kurznachricht KN (Short Message SM) ein und sendet diese Kurznachricht KN mit der eingebundenen Mitteilungsnachricht MN in bekannter Weise über das Festnetz FN an das Empfangs-Telekommunikationsgerät ETKG. Hierfür ist es jedoch notwendig, dass das Empfangs-Telekommunikationsgerät ETKG bei dem Kurznachrichtendienstzentrum KNDZ registriert ist. Die Registrierung bei dem Kurznachrichtendienstzentrum KNDZ erfolgt analog zu der Registrierung bei dem Multimedianachrichtendienstzentrum MMNDZ.

Mit dem Erhalt der Mitteilungsnachricht MN baut das Empfangs-Telekommunikationsgerät ETKG über das Festnetz FN eine temporäre Telekommunikationsverbindung oder eine temporäre Internetverbindung gemäß dem TCP/IP-Protokoll (Transmission Control Protocol/Internet Protocol) zu dem Multimedianachrichtendienstzentrum MMNDZ, bei dem es wie vorstehend erwähnt registriert ist, auf, um die dort hinterlegte Multimedianachricht MMN abzuholen.

Die Tatsache, dass das Empfangs-Telekommunikationsgerät ETKG - wie bereits vorstehend festgehalten - normalerweise jeweils nur an einem einzigen Multimedianachrichtendienstzentrum und Kurznachrichtendienstzentrum registriert ist, bedeutet, dass der Verbindungsaufbau zum Abholen der Multimedianachricht MMN immer nur bei dem im Telekommunikationsgerät jeweils gespeicherten Multimedianachrichtendienstzentrum erfolgen kann.

Die Multimedianachricht selber muss allerdings nicht zwangsläufig immer auf einem Daten-Server (einer Hinterlegungsstelle) des Multimedianachrichtendienstzentrums liegen, bei dem das die Multimedianachricht abholende Telekommunikationsgerät registriert ist, sondern sie kann sich irgendwo anders auf einem x-beliebigen Daten-Server befinden, so z.B. bei einem Daten- Server eines anderen Multimedianachrichtendienstzentrums. Dieser Fall tritt jedes Mal dann auf, wenn das Sende-Telekommunikationsgerät STKG als Absender der Multimedianachricht MMN bei einem anderen Multimedianachrichtendienstzentrum registriert ist. In FIGUR 2 ist dieser Fall dargestellt.

FIGUR 2 zeigt wie FIGUR 1 die Übertragung einer Multimedianachricht MMN (Multimedia Message MM) im Festnetz FN von einem Sende-Telekommunikationsgerät STKG zu einem Empfangs-Telekommunikationsgerät ETKG, bei dem jetzt aber im Unterschied zur FIGUR 1 beide Geräte bei unterschiedlichen Multimedianachrichtendienstzentren MMNDZ, MMNDZ. (Multimedia Message Service Center MMSC) registriert sind, die beide dem Festnetz FN zugeordnet sind. Während das Sende-Telekommunikationsgerät STKG wie in FIGUR 1 beim Multimedianachrichtendienstzentrum MMNDZ registriert ist, ist das Empfangs-Telekommunikationsgerät ETKG bei einem weiteren Multimedianachrichtendienstzentrum MMNDZ' registriert.

'Zugeordnet' bedeutet dabei, dass das Multimedianachrichtendienstzentrum MMNDZ, MMNDZ' entweder Bestandteil des Festnetzes FN ist oder außerhalb des Festnetzes FN angeordnet ist. Die Registrierung des Sende-Telelommunikationsgerätes STKG bzw. des Empfangs-Telekommunikationsgerätes ETKG bei dem Multimedianachrichtendienstzentrum MMNDZ bzw. dem weiteren Multimedianachrichtendienstzentrum MMNDZ' erfolgt durch das Einprogrammieren einer Empfangs- und Sendenummer des Dienstzentrums in das jeweilige Gerät. Dies geschieht wieder dadurch, dass das jeweilige Telekommunikationsgerät entweder werksseitig vorkonfiguriert wird oder durch den Benutzer des Gerätes manuell konfiguriert wird oder durch eine spezielle Konfigurationsnachricht konfiguriert wird, die ein einziges Mal bei der Erstinbetriebnahme (Installation) des MMS-Dienstes z.B. über den SMS-Dienst von dem Multimedianachrichtendienstzentrum MMNDZ an das Sende-Telekommunikationsgerät STKG bzw. von dem weiteren Multimedianachrichtendienstzentrum MMNDZ an das Empfangs-Telekommunikationsgerät ETKG übertragen wird und mit der jeweils die für die Installation des MMS-Dienstes notwendigen Daten dynamisch aufgespielt werden.

Die Übertragung der Multimedianachricht MMN beginnt zunächst wieder damit, dass das Sende-Telekommunikationsgerät STKG die für das Empfangs-Telekommunikationsgerät ETKG bestimmte Multimedianachricht MMN über das Festnetz FN an das Multimedianachrichtendienstzentrum MMNDZ sendet. Das Multimedianachrichtendienstzentrum MMNDZ erkennt jedoch, dass das adressierte Empfangs-Telekommunikationsgerät ETKG nicht bei ihm registriert ist, sondern an dem weiteren Multimedianachrichtendienstzentrum MMNDZ'. Es sendet daraufhin eine Information INF mit der dazugehörigen Multimedianachricht MMN an das weitere Multimedianachrichtendienstzentrum MMNDZ,". Das diese Information und Nachricht empfangende weitere Multimedianachrichtendienstzentrum MMNDZ' sendet danach, um das Empfangs-Telekommunikationsgerät ETKG darüber zu informieren, dass es von dem Multimedianachrichtendienstzentrum MMNDZ die für das Empfangs-Telekommunikationsgerät ETKG bestimmte Multimedianachricht MMN erhalten hat, wieder eine Mitteilungsnachricht MN an ein Kurznachrichtendienstzentrum KNDZ (Short Message Service Center SMSC), das als Überbringer der Information für das Empfangs-Telekommunikationsgerät ETKG wieder wie die beiden Multimedianachrichtendienstzentren MMNDZ, MMDZ' dem Festnetz FN zugeordnet ist. Das Kurznachrichtendienstzentrum KNDZ fügt wieder die empfangene Mitteilungsnachricht MN in eine Kurznachricht KN (Short Message SM) ein und sendet diese Kurznachricht KN mit der eingebundenen Mitteilungsnachricht MN in bekannter Weise über das Festnetz FN an das Empfangs-Telekommunikationsgerät ETKG, das hierzu wieder bei dem Kurznachrichtendienstzentrum KNDZ registriert ist. Die Registrierung bei dem Kurznachrichtendienstzentrum KNDZ erfolgt analog zu der Registrierung bei dem weiteren Multimedianachrichtendienstzentrum MMNDZ'.

Mit dem Erhalt der Mitteilungsnachricht MN baut das Empfangs-Telekommunikationsgerät ETKG über das Festnetz FN eine temporäre Telekommunikationsverbindung oder eine temporäre Internetverbindung gemäß dem TCP/IP-Protokoll(Transmission Control Protocol/Internet Protocol) zu dem weiteren Multimedianachrichtendienstzentrum MMNDZ`, bei dem es wie vorstehend erwähnt registriert ist, auf, um die dort eingetroffene und zum Abholen hinterlegte Multimedianachricht MMN abzuholen.

Die Ausführungen zu FIGUR 2 zeigen, dass die beiden beteiligten Multimedianachrichtendienstzentren über geeignete Mechanismen verfügen, um die Multimedianachricht von einem Dienstzentrum an das andere Dienstzentrum zu übermitteln. Da sich Festnetzbetreiber solcher Dienstzentren oftmals in Konkurrenzsituationen befinden oder vielleicht sogar im Ausland liegen, bestehen oft entsprechende bilaterale Abkommen zwischen den Betreibern nicht, so dass die Multimedianachricht in einem solchem Fall eventuell gar nicht übertragen werden kann.

Im Mobilfunkbereich wird dieses Problem durch Absprachen zwischen den einzelnen Betreibern von Multimediadienstzentren umgangen.

Beim SMS-Dienst im Festnetzbereich gibt es derzeit in Deutschland die erwähnte Konkurrenzsituation. Zur Lösung des geschilderten Problems werden in den Telekommunikationsgeräten die Nummern von mehreren Kurznachrichtendienstzentren vorgehalten, um auch von bei nicht-angemeldeten Kurznachrichtendienstzentren Kurznachrichten empfangen zu können. Der Empfang einer Kurznachricht ist im allgemeinen allerdings auch kein Problem, da der Verbindungsaufbau immer vom liefernden Kurznachrichtendienstzentrum initiiert wird.

Die Ausführungen zu den FIGUREN 1 und 2 offenbaren ein weiteres Problem im Zusammenhang mit der Übertragung von Multimedianachrichten (Implementierung des MMS-Dienstes).

So wird - wie bereits eingangs erläutert - beim MMS-Dienst für das Übertragen der Multimedianachricht von einem Absender zu einem Adressaten zunächst eine Mitteilungsnachricht, die sogenannte "MMS-Notification" verschickt, mit der der Adressat darüber informiert wird, dass eine Multimedianachricht beim Multimedianachrichtendienstzentrum (Multimedia Message Service Center MMSC) vorliegt. Dies geschieht vorzugsweise über einen Push-Dienst, wie z.B. den SMS-Dienst. Anschließend muss, im Unterschied zum Empfang einer Kurznachricht beim SMS-Dienst, jedoch noch der Inhalt der Multimedianachricht abgeholt werden.

Zu diesem Zweck baut das Adressaten-Endgerät eine Verbindung zum Multimedianachrichtendienstzentrum auf und holt den Inhalt der Multimedianachricht über diese Verbindung ab. Falls im Endgerät "immediate retrieval" (sofortiger Empfang) eingestellt ist, erfolgt dieser Verbindungsaufbau unmittelbar nach Beendigung der zur Übertragung der SMS-Nachricht bzw. der Mitteilungsnachricht (MMS-Notification) aufgebauten Verbindung.

Soll das Abholen der Multimedianachricht kostenlos sein, so muss das Multimedianachrichtendienstzentrum geeignete Rufnummern bereithalten, die es dem Endgerät ermöglichen, einen kostenlosen Anruf zu tätigen. Dies verursacht auf der Seite des Multimedianachrichtendienstzentrum zusätzliche Kosten für das Bereitstellen der entsprechenden Zugangsnummern.

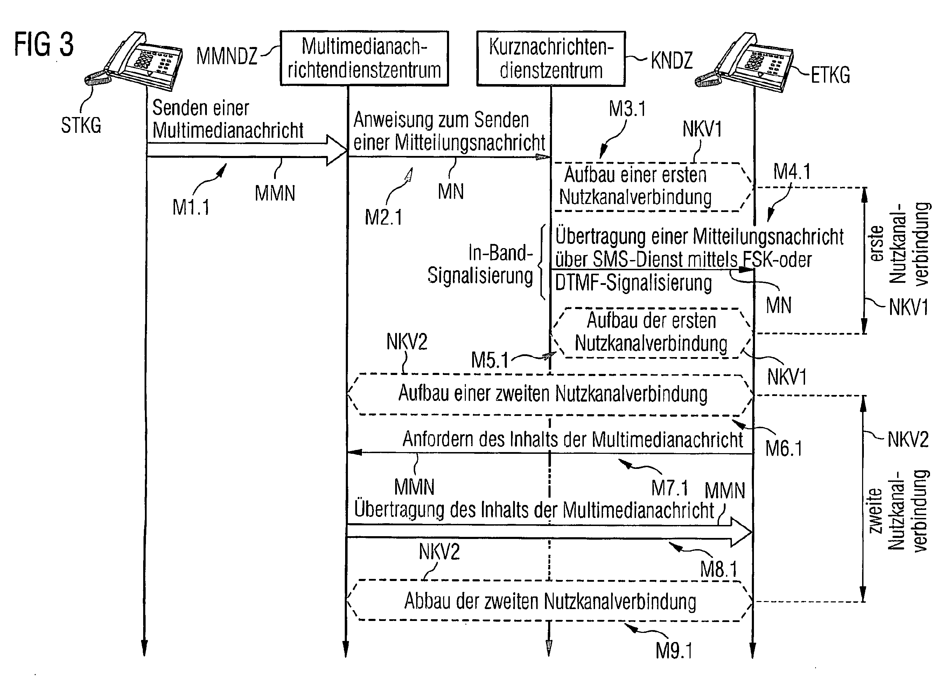

Dieses vor dem Hintergrund des Stands der Technik (z.B. FIGUR 1) diskutierte Problem ist in FIGUR 3 dargestellt. Es zeigt:

FIGUR 3 ein "Sequence Chart", bei dem ausgehend von FIGUR 1 die Sequenz von Maßnahmen im Zusammenhang mit dem Übertragen einer Multimedianachricht von einem Absender (Sendegerät) zu einem Adressaten (Empfangsgerät) im Festnetz dargestellt sind.

FIGUR 3 zeigt ausgehend von FIGUR 1 die Sequenz von Maßnahmen M1.1 bis M9.1 im Zusammenhang mit dem Übertragen der Multimedianachricht MMN von dem Sende-Telekommunikationsgerät STKG zu dem Empfangs-Telekommunikationsgerät ETKG im Festnetz FN. Zunächst wird gemäß einer ersten Maßnahme M1.1 die Multimedianachricht MMN vom Sende-Telekommunikationsgerät STKG zum Multimedianachrichtendienstzentrum MMNDZ übertragen und dort vorzugsweise bis zu dem Zeitpunkt, wo die Multimedianachricht von dem Empfänger (hier: das Empfangs-Telekommunikationsgerät ETKG) abgeholt wird, zwischengespeichert bzw. hinterlegt. Gemäß einer zweiten Maßnahme M2.1 veranlasst (initiiert) das Multimedianachrichtendienstzentrum MMNDZ das Versenden der Mitteilungsnachricht MN, der sogenannten MMS-Notification, an das Empfangs-Telekommunikationsgerät ETKG, worauf ein nicht dargestelltes "Push-Proxy-Gateway (PPG)" des Multimedianachrichtendienstzentrum MMNDZ die Mitteilungsnachricht MN zum Kurznachrichtendienstzentrum KNDZ, dem sogenannten "Short Message Service Center SMSC", überträgt.

Um die Mitteilungsnachricht MN entsprechend der Anweisung durch das Multimedianachrichtendienstzentrum MMNDZ an das Empfangs-Telekommunikationsgerät ETKG versenden zu können, baut das Kurznachrichtendienstzentrum KNDZ gemäß einer dritten Maßnahme M3.1 eine "leitungsvermittelte (circuit switched)" und somit kostenpflichtige erste Nutzkanalverbindung NKV1 zu dem Empfangs-Telekommunikationsgerät ETKG auf. Gemäß einer vierten Maßnahme M4.1 wird anschließend über diese aufgebaute Verbindung (In-Band-Signalisierung) die Mitteilungsnachricht MN "verpackt" in der Kurznachricht KN (Nutzung des SMS-Dienstes) mittels der eingangs bereits erwähnten FSK- oder DTMF-Signalisierung und einer Übertragungsrate von z.B. 1200 Baud an das Empfangs-Telekommunikationsgerät ETKG verschickt. Ist die Mitteilungsnachricht MN übertragen, so wird gemäß einer fünften Maßnahme M5.1 die erste Nutzkanalverbindung NKV1 wieder abgebaut. Dieser Abbau der Verbindung kann nach FIGUR 3 sowohl von dem Empfangs-Telekommunikationsgerät ETKG als auch von dem Kurznachrichtendienstzentrum KNDZ erfolgen.

Gemäß einer sechsten Maßnahme M6.1 baut das Empfangs-Telekommunikationsgerät ETKG nach dem Abbau der ersten Nutzkanalverbindung NKV1 eine ebenfalls "leitungsvermittelte (circuit switched)" und somit kostenpflichtige zweite Nutzkanalverbindung NKV2 zum Multimedianachrichtendienstzentrum MMNDZ auf. Über diese zweite Nutzkanalverbindung NKV2 fordert das Empfangs-Telekommunikationsgerät ETKG gemäß einer siebten Maßnahme M7.1 den Inhalt (Content) der Multimedianachricht MMN von dem Multimedianachrichtendienstzentrum MMNDZ an. Gemäß einer achten Maßnahme M8.1 wird daraufhin von dem Multimedianachrichtendienstzentrum MMNDZ der angeforderte Inhalt z.B. über eine TCP/IP-Sitzung (Transmission Control Protocol/Internet Protocol) an das Empfangs-Telekommunikationsgerät ETKG übertragen. Nachdem der Inhalt der Multimedianachricht MMN übertragen worden ist, wird gemäß einer neunten Maßnahme M9.1 auch die zweite Nutzkanalverbindung NKV2 wieder abgebaut. Dieser Abbau der Verbindung kann nach FIGUR 3 sowohl von dem Empfangs-Telekommunikationsgerät ETKG als auch von dem Multimedianachrichtendienstzentrum MMNDZ erfolgen.

Die der Erfindung zugrundeliegende Aufgabe besteht darin, ein Verfahren und Multimedianachrichtenzentrum zum Zustellen einer Multimedianachricht an ein als Multimedianachrichtensenke ausgebildetes Telekommunikationsgerät sowie ein Telekommunikationsgerät zum Zugreifen auf bei einer Hinterlegungsstelle eines Multimedianachrichtendienstzentrums hinterlegte Multimedianachrichten anzugeben, bei dem die Zeit für die Übertragung der Multimedianachricht von einem beliebigen Absender zu einem beliebigen Adressaten verkürzt wird und damit insgesamt die Kosten für den Dienst "Multimedia Message Service (MMS)" reduziert werden können.

Diese Aufgabe wird ausgehend von dem im Oberbegriff des Anspruchs 1 definierten Verfahren durch die im Kennzeichen des Anspruchs 1 angegebenen Merkmale gelöst.

Diese Aufgabe wird außerdem ausgehend von dem im Oberbegriff des Anspruchs 15 definierten Multimedianachrichtendienstzentrum durch die im Kennzeichen des Anspruchs 15 angegebenen Merkmale gelöst.

Diese Aufgabe wird weiterhin ausgehend von dem im Oberbegriff des Anspruchs 28 definierten Telekommunikationsgerät durch die im Kennzeichen des Anspruchs 28 angegebenen Merkmale gelöst.

Die der Erfindung zugrundeliegende Idee besteht darin, dass beim Zustellen einer von einem Absender stammenden Multimedianachricht an ein als Multimedianachrichtensenke ausgebildetes Telekommunikationsgerät (Adressaten-Endgerät) das unmittelbare oder mittelbare Senden einer Mitteilungsnachricht, der MMS-Notification, von einem Multimedianachrichtendienstzentrum zu einem Adressaten-Endgerät und das Abholen des Inhalts der Multimedianachricht durch das Adressaten-Endgerät beim Multimedianachrichtendienstzentrum während einer Nutzkanalverbindung in zwei getrennten Sitzungen zwischen dem Adressaten-Endgerät und dem Dienstzentrum stattfindet.

So bleibt eine von einem Multimedianachrichtendienstzentrum, das z.B. eine von einem Sende-Telekommunikationsgerät für ein Empfangs-Telekommunikationsgerät bestimmte Multimedianachricht erhalten hat, für die Übertragung einer Mitteilungsnachricht an das Empfangs-Telekommunikationsgerät während einer SMS-Sitzung (Nutzung des Diensts "Short Message Service"), mit der es das Empfangs-Telekommunikationsgerät über das Eintreffen der Multimedianachricht informiert, aufgebaute Nutzkanalverbindung zu dem Empfangs-Telekommunikationsgerät mindestens solange aufgebaut, bis das Empfangs-Telekommunikationsgerät die empfangene Mitteilungsnachricht ausgewertet und eine MMS-Sitzung zum Abholen des Nachrichteninhalts der für das Empfangs-Telekommunikationsgerät bestimmten Multimedianachricht beim Multimedianachrichtendienstzentrum durchgeführt hat.

Es sind nicht mehr, wie beim Stand der Technik, zwei getrennte Nutzkanalverbindungen notwendig, um den Inhalt der Multimedianachricht zu erhalten, sondern nur noch eine Verbindung, die vom Multimedianachrichtendienstzentrum initiiert wird.

Dies hat folgende Vorteile:
- Keine Notwendigkeit der Bereitstellung kostenfreier Zugangsrufnummern seitens des Multimedianachrichtendienstzentrums, sofern ein kostenfreier Zugang zum Multimedianachrichtendienstzentrum beabsichtigt und gewollt ist.
- Schnellere Abwicklung eines MMS-Dienstes, da die Zeit für den Aufbau einer Nutzkanalverbindung durch das Telekommunikationsgerät eingespart wird.
- Einsparung weiterer Zeit, da Authentisierungsmechanismen nicht benötigt werden.
- Einsparung einer zusätzlichen Zugangsnummer im Telekommunikationsgerät, sofern für das Versenden und Empfangen einer Multimedianachricht im Telekommunikationsgerät verschiedene Einwahlnummern vorgesehen sind.
- Abrechnungsvorteile beim Betreiber des Multimedianachrichtendienstzentrums.

Weitere vorteilhafte Weiterbildungen der Erfindung sind in den abhängigen Ansprüchen sowie der Beschreibung des Ausführungsbeispiels der Erfindung angegeben.

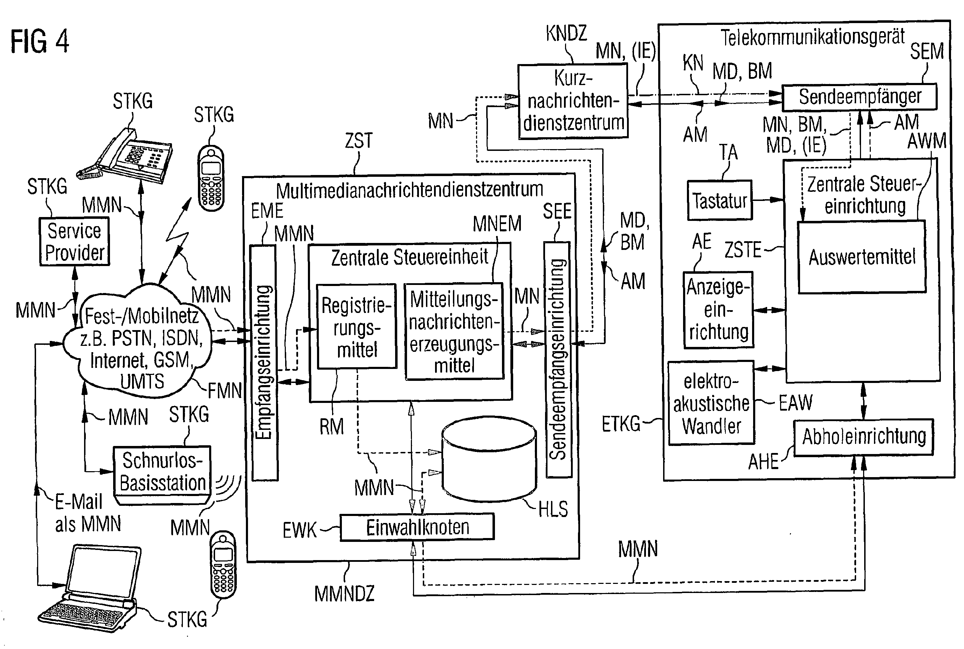

Ein Ausführungsbeispiel der Erfindung wird anhand der FIGUREN 4 bis 6 beschrieben. Es zeigen:

FIGUR 4 ausgehend von FIGUR 1 das Übertragen von Multimedianachrichten im Fest-/Mobilnetz von einem Absender (Sendegerät) zu einem Adressaten (Empfangsgerät), wenn beide Geräte entweder beim gleichen bei Multimedianachrichtendienstzentrum oder bei unterschiedlichen Multimedianachrichtendienstzentren registriert sind, unter alleiniger Beteiligung des Abhol-Multimedianachrichtendienstzentrums, wobei die Nachrichten-Hinterlegungsstelle und der Einwahlknoten innerhalb des Abhol-Multimedianachrichtendienstzentrums angeordnet sind,

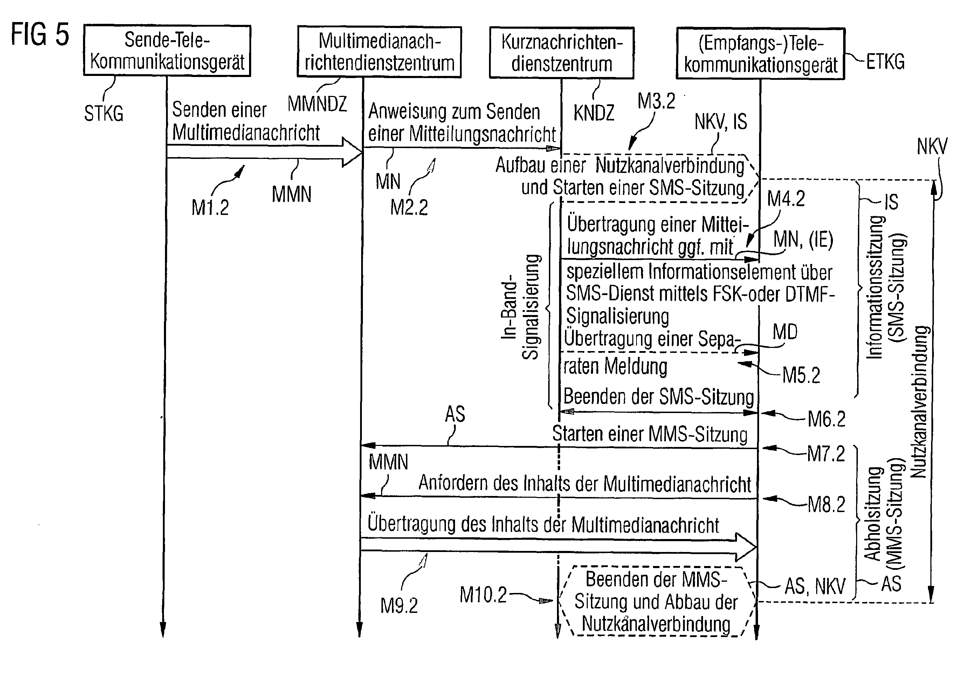

FIGUR 5 ein erstes "Sequence Chart", bei dem ausgehend von den FIGUREN 3 und 4 die Sequenz von Maßnahmen im Zusammenhang mit dem Übertragen einer Multimedianachricht von einem Absender (Sendegerät) zu einem Adressaten (Empfangsgerät) dargestellt sind, wobei das Multimedianachrichtendienstzentrum und das Kurznachrichtendienstzentrum zwei separate, z.B. örtlich voneinander getrennte Dienstzentren sind,

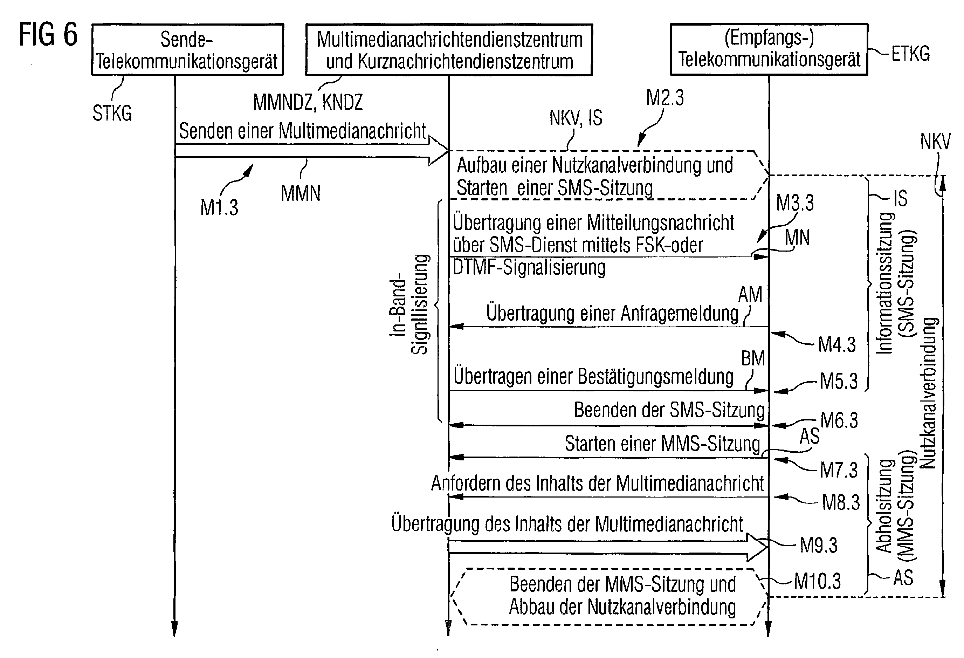

FIGUR 6 ein zweites "Sequence Chart", bei dem ausgehend von den FIGUREN 3 und 4 die Sequenz von Maßnahmen im Zusammenhang mit dem Übertragen einer Multimedianachricht von einem Absender (Sendegerät) zu einem Adressaten (Empfangsgerät) dargestellt sind, wobei das Multimedianachrichtendienstzentrum und das Kurznachrichtendienstzentrum ein gemeinsames Dienstzentrum bilden.

FIGUR 4 zeigt ausgehend von den FIGUREN 1 und 2 die Übertragung einer Multimedianachricht MMN (Multimedia Message MM) in einem Fest-/Mobilnetz FMN von einem Sende-Telekommunikationsgerät STKG zu einem Empfangs-Telekommunikationsgerät ETKG, bei dem beide Geräte entweder bei unterschiedlichen Multimedianachrichtendienstzentren MMNDZ, MMNDZ' (Multimedia Message Service Center MMSC) oder bei ein und demselben Multimedianachrichtendienstzentrum, z.B. dem Multimedianachrichtendienstzentrum MMNDZ oder dem weiteren Multimedianachrichtendienstzentrum MMNDZ`, registriert sind. Das Multimedianachrichtendienstzentrum oder die Multimedianachrichtendienstzentren sind dem Fest-/Mobilnetz FMN zugeordnet. Während das Sende-Telekommunikationsgerät STKG wie in den FIGUREN 1 und 2 bei dem Multimedianachrichtendienstzentrum MMNDZ registriert ist, kann das Empfangs-Telekommunikationsgerät ETKG nun wie in der FIGUR 2 bei dem weiteren Multimedianachrichtendienstzentrum MMNDZ` oder gemäß der Darstellung in der FIGUR 4 wie das Sende-Telekommunikationsgerät STKG bei dem Multimedianachrichtendienstzentrum MMNDZ registriert sein.

'Zugeordnet' bezüglich des Fest-/Mobilnetzes FMN bedeutet, dass das Multimedianachrichtendienstzentrum MMNDZ entweder Bestandteil des Fest-/Mobilnetzes FMN ist oder außerhalb des Fest-/Mobilnetzes FMN angeordnet ist. Die Registrierung des Sende-Telekommunikationsgerätes STKG bzw. des Empfangs-Telekommunikationsgerätes ETKG bei dem Multimedianachrichtendienstzentrum MMNDZ erfolgt durch das Einprogrammieren einer Empfangs- und Sendenummer des Dienstzentrums in das jeweilige Gerät. Dies geschieht dadurch, dass das jeweilige Telekommunikationsgerät entweder werksseitig vorkonfiguriert wird oder durch den Benutzer des Gerätes manuell konfiguriert wird oder durch eine spezielle Konfigurationsnachricht konfiguriert wird, die ein einziges Mal bei der Erstinbetriebnahme (Installation) des MMS-Dienstes z.B. über den SMS-Dienst von dem Multimedianachrichtendienstzentrum MMNDZ an das Sende-Telekommunikationsgerät STKG und an das Empfangs-Telekommunikationsgerät ETKG übertragen wird und mit der jeweils die für die Installation des MMS-Dienstes notwendigen Daten dynamisch aufgespielt werden.

Das Sende-Telekommunikationsgerät STKG kann unterschiedlich ausgebildet sein; so z.B. als schnurgebundenes Telefon, als GSM/UMTS-Mobiltelefon, als DECT-Schnurlostelefon bestehend aus einer Schnurlos-Basisstation und mindestens einem Schnurlos-Mobilteil, einem tragbaren Personal Computer (Notebook) oder als Service Provider. Diese Aufzählung ist nicht abschließend, sondern kann beliebig um solche Geräte erweitert werden, die ebenfalls in der Lage sind Multimedianachrichten MMN über das Fest-/Mobilnetz FMN an das Empfangs-Telekommunikationsgerät ETKG zu senden (so z.B. ein Faksimilegerät). Außerdem spielt es auch keine Rolle, in welcher Form die Multimedianachricht MMN gesendet wird. So ist es beispielsweise neben den bekannten Versandformen auch möglich, dass eine E-Mail als Multimedianachricht MMN verschickt wird.

Die Übertragung der Multimedianachricht MMN beginnt zunächst damit, dass das Sende-Telekommunikationsgerät STKG die für das Empfangs-Telekommunikationsgerät ETKG bestimmte Multimedianachricht MMN über das Fest-/Mobilnetz FMN an das Multimedianachrichtendienstzentrum MMNDZ sendet. Für den Empfang der von dem Sende-Telekommunikationsgerät STKG gesendeten Multimedianachricht MMN weist das Multimedianachrichtendienstzentrum MMNDZ eine Empfangseinrichtung EME auf. Die Empfangseinrichtung EME leitet die empfangene Multimedianachricht MMN weiter an eine Zentrale Steuereinheit ZST des Multimedianachrichtendienstzentrums MMNDZ, die die Bedienungs- und Funktionsabläufe in dem Multimedianachrichtendienstzentrum MMNDZ steuert. In dieser Zentralen Steuereinheit ZST sind vorzugsweise als Software ausgebildete Registrierungsmittel RM enthalten, die die weitergeleitete Multimedianachricht MMN registrieren und zur temporären Zwischenspeicherung an eine mit der Zentralen Steuereinheit ZST verbundene und innerhalb des Multimedianachrichtendienstzentrums MMNDZ angeordnete Hinterlegungsstelle HLS weiterleiten.

Mit der Registrierung und Hinterlegung der Multimedianachricht MMN wird das Empfangs-Telekommunikationsgerät ETKG von der Zentralen Steuereinheit ZST des Multimedianachrichtendienstzentrums MMNDZ darüber informiert, dass im Multimedianachrichtendienstzentrum MMNDZ eine für das Empfangs-Telekommunikationsgerät ETKG bestimmte Multimedianachricht zur Abholung hinterlegt ist. Zu diesem Zweck weist die Zentrale Steuereinheit ZST neben den Registrierungsmitteln RM noch ebenfalls vorzugsweise als Software ausgebildete Mittel zur Erzeugung von Mitteilungsnachrichten MNEM auf. Die Mitteilungsnachrichtenerzeugungsmittel MNEM erzeugen eine Mitteilungsnachricht MN, die bei der Implementierung des MMS-Dienstes im Festnetz eingeführte MMS-Notification, zur Information des Empfangs-Telekommunikationsgerätes ETKG über das Vorliegen einer für das Empfangs-Telekommunikationsgerät ETKG bestimmten Multimedianachricht. Die Mitteilungsnachricht MN wird zu diesem Zweck von der Zentralen Steuereinheit ZST zu einer Sendeempfangseinrichtung SEE in dem Multimedianachrichtendienstzentrums MMNDZ weitergeleitet.

Ist das Empfangs-Telekommunikationsgerät ETKG wie das Sende-Telekommunikationsgerät STKG bei dem in FIGUR 4 dargestellten Multimedianachrichtendienstzentrum MMNDZ registriert, so gibt es kein Problem, bei welchem Multimedianachrichtendienstzentrum MMNDZ sich das Empfangs-Telekommunikationsgerät ETKG einwählen muss, um den Inhalt der Multimedianachricht MMN abzuholen.

Anders sieht es jedoch aus, wenn das Empfangs-Telekommunikationsgerät ETKG und das Sende-Telekommunikationsgerät STKG bei unterschiedlichen Multimedianachrichtendienstzentren, wie z.B. wie in FIGUR 2, registriert sind. Um in einem solchen Fall den Inhalt der Multimedianachricht abzuholen zu können, muss das Empfangs-Telekommunikationsgerät ETKG entweder mitgeteilt bekommen, wo es sich einwählen muss, oder die Multimedianachrichtendienstzentren tauschen sich aus und stellen dabei sicher, dass das Empfangs-Telekommunikationsgerät ETKG den Inhalt der Multimedianachricht bekommt.

Im erstgenannten Fall weist die in FIGUR 4 dargestellte Zentrale Steuereinheit ZST des Multimedianachrichtendienstzentrums MMNDZ gemäß der nachveröffentlichten Internationalen Patentanmeldung (int. Aktenzeichen "PCT/EP03/14639") Einwahlinformationserzeugungsmittel auf, die eine Einwahlinformation erzeugen, mit der dem Empfangs-Telekommunikationsgerät ETKG mitgeteilt wird, wo es sich Einwählen muss, um auf die hinterlegte Multimedianachricht zugreifen und diese abholen zu können.

Die an die Sendeempfangseinrichtung SEE weitergeleitete Mitteilungsnachricht MN wird von dieser an das Empfangs-Telekommunikationsgerät ETKG übertragen. Diese Übertragung kann unmittelbar, also direkt vom Multimedianachrichtendienstzentrum MMNDZ oder mittelbar, also unter Zwischenschaltung mindestens einer weiteren Instanz erfolgen. Für die unmittelbare Übertragung der Mitteilungsnachricht MN müsste zwischen dem Multimedianachrichtendienstzentrum MMNDZ und dem Empfangs-Telekommunikationsgerät ETKG unabhängig davon, ob das Empfangs-Telekommunikationsgerät ETKG bei dem Multimedianachrichtendienstzentrum MMNDZ registriert ist oder nicht ein entsprechendes Übertragungsprotokoll definiert und spezifiziert werden, damit das Empfangs-Telekommunikationsgerät ETKG die übertragene Nachricht und Information auch als solche erkennen und interpretieren kann. Als Alternative hierzu ist es aber auch möglich die weitere Instanz und das Multimedianachrichtendienstzentrum MMNDZ als ein gemeinsames Dienstzentrum zu betreiben (vgl. FIGUR 6).

Anders sieht es bei der mittelbaren Übertragung aus, bei der für die Übertragung der Mitteilungsnachricht MN in der Regel ein Übertragungsdienst bemüht wird. Wie bereits bei der Beschreibung der FIGUREN 1 und 2 dargelegt, handelt es sich hierbei um den Kurznachrichtendienst oder auch SMS-Dienst mit einem SMS-spezifischen Übertragungsprotokoll. Beim SMS-Dienst wird die Übertragung der an das Telekommunikationsgerät zu übertragenden Nachricht und Information unabhängig davon, ob das Empfangs-Telekommunikationsgerät ETKG bei dem Multimedianachrichtendienstzentrum MMNDZ registriert ist oder nicht durch ein entsprechendes Kurznachrichtendienstzentrum bewerkstelligt. Es sind für den genannten Zweck aber auch noch andere Dienste vorstellbar.

Für die Übertragung der Mitteilungsnachricht MN in der FIGUR 4 wird wie in den FIGUREN 1 und 2 wieder der SMS-Dienst herangezogen. Demzufolge sendet die Sendeempfangseinrichtung SEE die Mitteilungsnachricht MN an ein Kurznachrichtendienstzentrum KNDZ (Short Message Service Center SMSC), das als Überbringer der Information für das Empfangs-Telekommunikationsgerät ETKG wieder wie die das Multimedianachrichtendienstzentrum MMNDZ dem Fest-/Mobilnetz FMN zugeordnet ist. Das Kurznachrichtendienstzentrum KNDZ fügt die empfangene Mitteilungsnachricht MN in eine als "Short Message Service"-Nachricht ausgebildete Kurznachricht KN (Short Message SM) ein und sendet diese Kurznachricht KN mit der eingebundenen Mitteilungsnachricht MN in bekannter Weise über das Fest-/Mobilnetz FMN an das mit dem Kurznachrichtendienstzentrum KNDZ verbundene Empfangs-Telekommunikationsgerät ETKG, das hierzu bei dem Kurznachrichtendienstzentrum KNDZ registriert ist. Die Registrierung bei dem Kurznachrichtendienstzentrum KNDZ erfolgt analog zu der Registrierung des Empfangs-Telekommunikationsgerätes ETKG und des Sende-Telekommunikationsgerätes STKG bei dem Multimedianachrichtendienstzentrum MMNDZ.

Statt die Mitteilungsnachricht MN unmittelbar in die Kurznachricht KN einzubinden, ist es alternativ auch möglich, dass die Mitteilungsnachricht MN mittelbar in die Kurznachricht KN eingebunden werden, indem zunächst eine Einbindung in einer "Wireless Application Protocol-Push"-Nachricht erfolgt und die "Wireless Application Protocol-Push"-Nachricht anschließend in die Kurznachricht KN eingebunden wird.

Damit die Mitteilungsnachricht MN von dem Empfangs-Telekommunikationsgerät ETKG empfangen werden kann, weist dieses neben den herkömmlichen Baugruppen eines solchen vorzugsweise als Telefon oder Schnurlostelefon betriebenen Telekommunikationsgerätes, wie z.B. eine Tastatur TA, eine Anzeigeeinrichtung AE und elektroakustische Wandler EAW, einen Sendempfänger SEM auf, der mit einer Zentralen Steuereinrichtung ZSTE verbunden ist, die Bedienungs- und Funktionsabläufe in dem Empfangs-Telekommunikationsgerät ETKG steuert. Zu diesem Zweck ist Zentrale Steuereinrichtung ZSTE auch mit der Tastatur TA, der Anzeigeeinrichtung AE und den elektroakustische Wandlern EAW verbunden. Über die Verbindung zu dem Sendeempfänger SEM gelangt letztlich die Mitteilungsnachricht MN in die Zentrale Steuereinrichtung ZSTE.

In der Zentralen Steuereinrichtung ZSTE sind vorzugsweise als Software ausgebildete Auswertemittel AWM enthalten, die die empfangene und an die Zentrale Steuerungseinrichtung ZSTE weitergeleitete Mitteilungsnachricht MN auswerten. Diese Auswertemittel AWM werten aber nicht nur diese Mitteilungsnachricht MN aus, sondern auch noch andere Informationen. Um zu sagen, welche Informationen noch zusätzlich ausgewertet werden, werd an dieser Stelle zunächst die FIGUREN 5 und 6 beschrieben, bevor im Anschluss daran die Beschreibung der FIGUR 4 fortgesetzt wird.

FIGUR 5 zeigt ausgehend von den FIGUREN 3 und 4 die Sequenz von Maßnahmen M1.2 bis M10.2 im Zusammenhang mit dem Übertragen der Multimedianachricht MMN von dem Sende-Telekommunikationsgerät STKG zu dem Empfangs-Telekommunikationsgerät ETKG im Fest-/Mobilnetz FMN, wobei das Multimedianachrichtendienstzentrum MMNDZ und das Kurznachrichtendienstzentrum KNDZ zwei separate, z.B. örtlich voneinander getrennte Dienstzentren sind. Zunächst wird gemäß einer ersten Maßnahme M1.2 die Multimedianachricht MMN vom Sende-Telekommunikationsgerät STKG zum Multimedianachrichtendienstzentrum MMNDZ übertragen und dort vorzugsweise bis zu dem Zeitpunkt, wo die Multimedianachricht von dem Empfänger (hier: das Empfangs-Telekommunikationsgerät ETKG) abgeholt wird, in der Hinterlegungsstelle HLS zwischengespeichert. Gemäß einer zweiten Maßnahme M2.2 veranlasst (initiiert) das Multimedianachrichtendienstzentrum MMNDZ das Versenden der Mitteilungsnachricht MN, der sogenannten MMS-Notification, an das Empfangs-Telekommunikationsgerät ETKG, worauf ein nicht dargestelltes "Push-Proxy-Gateway (PPG)" des Multimedianachrichtendienstzentrum MMNDZ die Mitteilungsnachricht MN zum Kurznachrichtendienstzentrum KNDZ, dem sogenannten "Short Message Service Center SMSC", überträgt.

Um die Mitteilungsnachricht MN entsprechend der Anweisung durch das Multimedianachrichtendienstzentrum MMNDZ an das Empfangs-Telekommunikationsgerät ETKG versenden zu können, baut das Kurznachrichtendienstzentrum KNDZ gemäß einer dritten Maßnahme M3.2 eine "leitungsvermittelte (circuit switched)" und somit kostenpflichtige Nutzkanalverbindung NKV zu dem Empfangs-Telekommunikationsgerät ETKG auf und es wird hiermit eine Informationssitzung IS eingeleitet, die wegen der Nutzung des SMS-Dienstes für die Übertragung der Mitteilungsnachricht auch als SMS-Sitzung bezeichnet wird. Während dieser Informationssitzung IS wird gemäß einer vierten Maßnahme M4.2 anschließend über die aufgebaute Verbindung (In-Band-Signalisierung) die Mitteilungsnachricht MN "verpackt" in der Kurznachricht KN (Nutzung des SMS-Dienstes) mittels der eingangs bereits erwähnten FSK- oder DTMF-Signalisierung und einer Übertragungsrate von z.B. 1200 Baud an das Empfangs-Telekommunikationsgerät ETKG verschickt.

Um dem Empfangs-Telekommunikationsgerät ETKG aber mitzuteilen, dass das die Nutzkanalverbindung NKV aufbauende Kurznachrichtendienstzentrum KNDZ, nicht beabsichtigt, die aufgebaute Nutzkanalverbindung NKV nach der Übertragung der Mitteilungsnachricht sofort wieder abzubauen, sondern vorzugsweise erst nach einer zeitlichen Verzögerung, wird dem Empfangs-Telekommunikationsgerät ETKG mit der Mitteilungsnachricht MN ein Informationselement IE eines für die Übertragung der Mitteilungsnachricht verwendeten Informationselementcontainer übertragen.

Eine solche Signalisierung kann entweder dadurch erfolgen, dass in einem "User Data Header"-Informationselement (UDH-IE) die Information "LineTime" enthalten ist, die angibt, für welche Zeitdauer die Verbindung offen gehalten wird, oder die Information "UseSameLink" enthalten ist, mit der das Empfangs-Telekommunikationsgerät ETKG aufgefordert wird, seinerseits eine neue Sitzung aufzubauen.

Diese ergänzende Mitteilung an das Empfangs-Telekommunikationsgerät ETKG hat darüber hinaus den Vorteil, dass das Empfangs-Telekommunikationsgerät ETKG in die Lage versetzt wird, falls es zum gegebenen Zeitpunkt bzw. für die eingeräumte Zeitdauer seinerseits keine neue Sitzung initiieren möchte, die aufgebaute Nutzkanalverbindung sofort wieder zu trennen und somit Kanalressourcen im Fest-/Mobilnetz FMN freizugeben.

Alternativ zu der Übertragung des Informationselementes IE mit der Mitteilungsnachricht MN ist es aber auch möglich, gemäß einer fünften Maßnahme M5.2 eine separate Meldung MD, die den gleiche Zweck erfüllt und die entweder ebenfalls in die Kurznachricht KN eingepackt ist oder sogar selbst eine eigene Kurznachricht sein kann, an das Empfangs-Telekommunikationsgerät ETKG zu übertragen. Diese Meldung kann z.B. wie folgt aussehen:
Wenn das Kurznachrichtendienstzentrum KNDZ das Empfangs-Telekommunikationsgerät ETKG nach der Übertragung der Mitteilungsnachricht auffordert, die Nutzkanalverbindung NKV abzubauen (Senden eines "Release"), dann kann das Kurznachrichtendienstzentrum KNDZ statt dieser Meldung "Release" eine neu zu definierende Meldung "Release, hold Line" bzw. "Establish-Link" als die angegebene Meldung MD schicken.

Sind die Mitteilungsnachricht MN und auch das Informationselement IE bzw. die Meldung MD übertragen, so wird gemäß einer sechsten Maßnahme M6.2 die Informationssitzung IS beendet. Das Beenden der Informationssitzung IS kann nach FIGUR 5 sowohl von dem Empfangs-Telekommunikationsgerät ETKG als auch von dem Kurznachrichtendienstzentrum KNDZ erfolgen.

Aufgrund dieser vorstehend beschriebenen zusätzlichen Signalisierung durch das Kurznachrichtendienstzentrum KNDZ beginnt (startet) das Empfangs-Telekommunikationsgerät ETKG gemäß einer siebten Maßnahme M7.2 nach dem Beenden der Informationssitzung IS zum Abholen des Inhalts der Multimedianachricht MMN mit einer Abholsitzung AS, die auch als MMS-Sitzung bezeichnet wird. Im Rahmen dieser Abholsitzung AS fordert das Empfangs-Telekommunikationsgerät ETKG gemäß einer achten Maßnahme M8.2 den Inhalt (Content) der Multimedianachricht MMN von dem Multimedianachrichtendienstzentrum MMNDZ an. An dieser Stelle sei angemerkt, dass es zwischen dem Multimedianachrichtendienstzentrum MNINDZ und Kurznachrichtendienstzentrum KNDZ eine physikalische "Backbone-Verbindung" gibt, über die das Empfangs-Telekommunikationsgerät ETKG den Inhalt der Multimedianachricht MMN abholen kann. Gemäß einer neunten Maßnahme M9.2 wird daraufhin von dem Multimedianachrichtendienstzentrum MMNDZ - je nachdem, um was für ein Gerät es sich bei dem Empfangs-Telekommunikationsgerät ETKG handelt (z.B. ein leitungsgebundenes analoges/digitales Telefon, ein analoges/digitales Schnurlostelefon, ein Mobiltelefon, ein Personal Computer, ein Faksimilegerät etc.) der angeforderte Inhalt nach einem TCP/IP-Protokoll (Transmission Control Protocol/Internet Protocol), einem Modem-Protokoll, einem PPP-Protokoll (Peer-To-Peer-Protocol), einem Faksimile-Protokoll oder einem WSP-Protokoll (Wireless Session Protocol) an das Empfangs-Telekommunikationsgerät ETKG übertragen. Nachdem der Inhalt der Multimedianachricht MMN übertragen worden ist, wird gemäß einer zehnten Maßnahme M10.2 zum einen die Abholsitzung AS beendet und zum anderen auch die Nutzkanalverbindung NKV zum Kurznachrichtendienstzentrum KNDZ wieder abgebaut. Beides kann nach FIGUR 5 sowohl von dem Empfangs-Telekommunikationsgerät ETKG als auch von dem Multimedianachrichtendienstzentrum MMNDZ über die "Backbone-Verbindung" bzw. dem Kurznachrichtendienstzentrum KNDZ erfolgen.

FIGUR 6 zeigt ausgehend von den FIGUREN 3 und 4 die Sequenz von Maßnahmen M1.3 bis M10.3 im Zusammenhang mit dem Übertragen der Multimedianachricht MMN von dem Sende-Telekommunikationsgerät STKG zu dem Empfangs-Telekommunikationsgerät ETKG im Fest-/Mobilnetz FMN, wobei das Multimedianachrichtendienstzentrum MMNDZ und das Kurznachrichtendienstzentrum KNDZ ein gemeinsames Dienstzentrum bilden. Zunächst wird gemäß einer ersten Maßnahme M1.3 die Multimedianachricht MMN vom Sende-Telekommunikationsgerät STKG zum Multimedianachrichtendienstzentrum MMNDZ übertragen und dort vorzugsweise bis zu dem Zeitpunkt, wo die Multimedianachricht von dem Empfänger (hier: das Empfangs-Telekommunikationsgerät ETKG) abgeholt wird, in der Hinterlegungsstelle HLS zwischengespeichert.

Um die Mitteilungsnachricht MN durch das Multimedianachrichtendienstzentrum MMNDZ/Kurznachrichtendienstzentrum KNDZ an das Empfangs-Telekommunikationsgerät ETKG versenden zu können, baut das Multimedianachrichtendienstzentrum MMNDZ/Kurznachrichtendienstzentrum KNDZ gemäß einer zweiten Maßnahme M2.3 eine "leitungsvermittelte (circuit switched)" und somit kostenpflichtige Nutzkanalverbindung NKV zu dem Empfangs-Telekommunikationsgerät ETKG auf und es wird hiermit eine Informationssitzung IS eingeleitet, die wegen der Nutzung des SMS-Dienstes für die Übertragung der Mitteilungsnachricht auch als SMS-Sitzung bezeichnet wird. Während dieser Informationssitzung IS wird gemäß einer dritten Maßnahme M3.3 anschließend über die aufgebaute Verbindung (In-Band-Signalisierung) die Mitteilungsnachricht MN "verpackt" in der Kurznachricht KN (Nutzung des SMS-Dienstes) mittels der eingangs bereits erwähnten FSK- oder DTMF-Signalisierung und einer Übertragungsrate von z.B. 1200 Baud an das Empfangs-Telekommunikationsgerät ETKG verschickt.

Als weiteren Unterschied zum Szenario nach FIGUR 5 wird dem Empfangs-Telekommunikationsgerät ETKG nun nicht von dem Multimedianachrichtendienstzentrum MMNDZ/Kurznachrichtendienstzentrum KNDZ mitgeteilt, dass das die Nutzkanalverbindung NKV aufbauende Multimedianachrichtendienstzentrum MMNDZ/Kurznachrichtendienstzentrum KNDZ nicht beabsichtigt, die aufgebaute Nutzkanalverbindung NKV nach der Übertragung der Mitteilungsnachricht für eine gewisse Zeitdauer aufgebaut zu lassen. Um einen Abbau der Nutzkanalverbindung NKV, wie es in FIGUR 3 mit der ersten Nutzkanalverbindung der Fall ist, zu verhindern, muss das Empfangs-Telekommunikationsgerät ETKG beim dargestellten Szenario von sich aus tätig werden.

Gemäß einer vierten Maßnahme M4.3 überträgt es eine Anfragemeldung AM an das Multimedianachrichtendienstzentrum MMNDZ/- Kurznachrichtendienstzentrum KNDZ und fragt bei diesem an, ob die aufgebaute Nutzkanalverbindung NKV nicht solange aufgebaut bleiben kann, bis der Inhalt der Multimedianachricht MMN bei dem Multimedianachrichtendienstzentrum MMNDZ/Kurznachrichtendienstzentrum KNDZ abgeholt ist. Die Anfragemeldung AM kann dazu vorzugsweise entweder wie die Mitteilungsnachricht ebenfalls in eine separate Kurznachricht eingepackt oder sogar selbst eine eigene Kurznachricht sein.

Wird diese Anfragemeldung AM gemäß einer fünften Maßnahme M5.3 mit einer Bestätigungsmeldung BM von Seiten des Multimedianachrichtendienstzentrums MMNDZ/Kurznachrichtendienstzentrums KNDZ beantwortet, dann wird wie von dem Empfangs-Telekommunikationsgerät ETKG beabsichtigt, die Nutzkanalverbindung NKV nicht abgebaut. Die Bestätigungsmeldung BM kann dazu wieder vorzugsweise entweder wie die Mitteilungsnachricht ebenfalls in eine separate Kurznachricht eingepackt oder sogar selbst eine eigene Kurznachricht sein.

Hat das Empfangs-Telekommunikationsgerät ETKG von dem Multimedianachrichtendienstzentrum MMNDZ/Kurznachrichtendienstzentrum KNDZ die Bestätigungsmeldung BM erhalten, so wird gemäß einer sechsten Maßnahme M6.3 die Informationssitzung IS beendet. Das Beenden der Informationssitzung IS kann nach FIGUR 5 sowohl von dem Empfangs-Telekommunikationsgerät ETKG als auch von dem Multimedianachrichtendienstzentrum MMNDZ/- Kurznachrichtendienstzentrum KNDZ erfolgen.

Aufgrund des vorstehend beschriebenen Meldungsaustausches beginnt (startet) das Empfangs-Telekommunikationsgerät ETKG gemäß einer siebten Maßnahme M7.3 nach dem Beenden der Informationssitzung IS zum Abholen des Inhalts der Multimedianachricht MMN mit einer Abholsitzung AS, die auch als MMS-Sitzung bezeichnet wird. Im Rahmen dieser Abholsitzung AS fordert das Empfangs-Telekommunikationsgerät ETKG gemäß einer achten Maßnahme M8.2 den Inhalt (Content) der Multimedianachricht MMN von dem Multimedianachrichtendienstzentrum MMNDZ/Kurznachrichtendienstzentrum KNDZ an. Gemäß einer neunten Maßnahme M9.2 wird daraufhin von dem Multimedianachrichtendienstzentrum MMNDZ/Kurznachrichtendienstzentrum KNDZ - je nachdem, um was für ein Gerät es sich bei dem Empfangs-Telekommunikationsgerät ETKG handelt (z.B. ein leitungsgebundenes analoges/digitales Telefon, ein analoges/digitales Schnurlostelefon, ein Mobiltelefon, ein Personal Computer, ein Faksimilegerät etc.) der angeforderte Inhalt nach einem TCP/IP-Protokoll (Transmission Control Protocol/Internet Protocol), einem Modem-Protokoll, einem PPP-Protokoll (Peer-To-Peer-Protocol), einem Faksimile-Protokoll oder einem WSP-Protokoll (Wireless Session Protocol) an das Empfangs-Telekommunikationsgerät ETKG übertragen. Nachdem der Inhalt der Multimedianachricht MMN übertragen worden ist, wird gemäß einer zehnten Maßnahme M10.2 zum einen die Abholsitzung AS beendet und zum anderen auch die Nutzkanalverbindung NKV zum Multimedianachrichtendienstzentrum MMNDZ/Kurznachrichtendienstzentrum KNDZ wieder abgebaut. Beides kann nach FIGUR 6 sowohl von dem Empfangs-Telekommunikationsgerät ETKG als auch von dem Multimedianachrichtendienstzentrum MMNDZ/Kurznachrichtendienstzentrum KNDZ erfolgen.

Es sei an dieser Stelle der Form halber angemerkt, dass das Multimedianachrichtendienstzentrum MMNDZ/Kurznachrichtendienstzentrum KNDZ in FIGFUR 6 auch an die Stelle des Multimedianachrichtendienstzentrum MMNDZ und des Kurznachrichtendienstzentrum KNDZ in FIGUR 5 treten kann und umgekehrt.

Die Auswertemittel AWM in FIGUR 4 werten somit auch das Informationselement IE, die Meldung MD und die Bestätigungsmeldung BM aus, die alle über den Sendeempfänger SEM der Zentralen Steuereinrichtung ZSTE zugeführt werden. Für das Abholen des Inhalts der Multimedianachricht MMN im Rahmen der Abholsitzung AS nach den FIGUREN 5 und 6 weist das Empfangs-Telekommunikationsgerät ETKG eine Abholeinrichtung AHE zum Abholen von Nachrichten und/oder Informationen auf, die einerseits mit der Zentralen Steuereinrichtung ZSTE und andererseits für die temporäre Verbindung nach dem TCP/IP-Protokoll (Transmission Control Protocol/Internet Protocol), dem Modem-Protokoll, dem PPP-Protokoll (Peer-To-Peer-Protocol), dem Faksimile-Protokoll und/oder dem WSP-Protokoll (Wireless Session Protocol) mit einem Einwahlknoten EWK des Multimedianachrichtendienstzentrum MMNDZ verbunden ist, so dass die Zentrale Steuerungseinrichtung ZSTE über die Abholeinrichtung AHE auf das Multimedianachrichtendienstzentrum MMNDZ zugreifen und die Multimedianachricht abholen kann.

Der Einwahlknoten EWK des Multimedianachrichtendienstzentrum MMNDZ ist wieder mit der Zentralen Steuereinheit ZST verbunden und bildet aus der Sicht des Multimedianachrichtendienstzentrum MMNDZ die Schnittstelle bzw. das Gateway zu dem Empfangs-Telekommunikationsgerät ETKG, über die bzw. das sowohl der Abholwunsch des Empfangs-Telekommunikationsgerätes ETKG als auch die von der Zentralen Steuereinheit ZST veranlasste Ausgabe der Multimedianachricht MMN abgewickelt wird.

## Patentansprüche

1. Verfahren zum Zustellen einer Multimedianachricht an ein als Multimedianachrichtensenke ausgebildetes Telekommunikationsgerät, bei dem
a) die Multimedianachricht (MMN) an ein für die Zustellung der Multimedianachricht (MMN) an das Telekommunikationsgerät (ETKG) als Multimedianachrichtenquelle ausgebildetes Multimedianachrichtendienstzentrum (MMNDZ) übertragen und hinterlegt wird,
b) das Multimedianachrichtendienstzentrum (MMNDZ) eine Mitteilungsnachricht (MN) unmittelbar oder mittelbar an das Telekommunikationsgerät (ETKG) sendet, mit der es das Telekommunikationsgerät (ETKG) über die hinterlegte Multimedianachricht (MMN) informiert,
c) für das Senden der Mitteilungsnachricht (MN) eine Nutzkanalverbindung (NKV) zu dem Telekommunikationsgerät (ETKG) unmittelbar oder mittelbar aufgebaut wird, über die die Mitteilungsnachricht (MN) in einer Informationssitzung (IS) übertragen wird,
d) mit der Übertragung der Mitteilungsnachricht (MN) die Informationssitzung (IS) beendet wird,
**dadurch gekennzeichnet, dass**
e) die aufgebaute Nutzkanalverbindung (NKV) zu dem Telekommunikationsgerät (ETKG) mindestens solange aufgebaut bleibt, bis das Telekommunikationsgerät (ETKG) die empfangene Mitteilungsnachricht (MN) ausgewertet und im Rahmen einer Abholsitzung (AS) den Nachrichteninhalt der für das Telekommunikationsgerät (ETKG) bestimmten Multimedianachricht (MMN) beim Multimedianachrichtendienstzentrum (MMNDZ) über die Nutzkanalverbindung (NKV) abgeholt hat.

2. Verfahren nach Anspruch 1, **dadurch gekennzeichnet, dass**
das Multimedianachrichtendienstzentrum (MMNDZ) in der Informationssitzung (IS) dem Telekommunikationsgerät (ETKG) signalisiert, dass die Nutzkanalverbindung (NKV) für eine vorgegebene Zeit, die für die Auswertung der Mitteilungsnachricht (MN) und die für die Dauer der Abholsitzung (AS) ausreicht, aufgebaut bleibt.

3. Verfahren nach Anspruch 2, **dadurch gekennzeic**h**net,** dass
die Signalisierung mit der Übertragung der Mitteilungsnachricht (MN) durch ein spezielles Informationselement (IE) eines für die Übertragung der Mitteilungsnachricht verwendeten Informationselementcontainer oder durch eine von der Übertragung der Mitteilungsnachricht (MN) getrennten, separaten Meldung (MD) erfolgt.

4. Verfahren nach Anspruch 1, **dadurch gekennzeic**h**net,** dass
das Telekommunikationsgerät (ETKG) in der Informationssitzung (IS) dem Multimedianachrichtendienstzentrum (MMNDZ) signalisiert, dass die Nutzkanalverbindung (NKV) für eine vorgegebene Zeit, die für die Auswertung der Mitteilungsnachricht (MN) und die für die Dauer der Abholsitzung (AS) ausreicht, aufgebaut bleiben soll.

5. Verfahren nach Anspruch 4, **dadurch gekennzeichnet, dass**
die Signalisierung durch einen Meldungsaustausch (MA) zwischen dem Telekommunikationsgerät (ETKG) und dem Multimedianachrichtendienstzentrum (MMNDZ) mit einer von dem Telekommunikationsgerät (ETKG) gesendeten Anfragemeldung (AM) und einer von dem Multimedianachrichtendienstzentrum (MMNDZ) gesendeten Bestätigungsmeldung (BM) erfolgt.

6. Verfahren nach Anspruch 1, 2, oder 4, **dadurch gekennzeichnet, dass**
die aufgebaute Nutzkanalverbindung (NKV) getrennt wird, falls das Telekommunikationsgerät (ETKG) beabsichtigt, in der Zeit, wo die Nutzkanalverbindung (NKV) aufgebaut ist, keine Abholsitzung (AS) zu beginnen.

7. Verfahren nach Anspruch 1, **dadurch gekennzeichnet, dass**
die Mitteilungsnachricht (MN) in eine als "Short Message Service"-Nachricht ausgebildete Kurznachricht (KN) eingefügt wird, wobei die Kurznachricht (KN) auf Anweisung des Multimedianachrichtendienstzentrum (MMNDZ) von einem Kurznachrichtendienstzentrum (KNDZ) an das Telekommunikationsgerät (ETKG) gesendet wird.

8. Verfahren nach Anspruch 1, **dadurch gekennzeichnet, dass**
die Mitteilungsnachricht (MN) in einer "Wireless Application Protocol-Push"-Nachricht und die "Wireless Application Protocol-Push"-Nachricht in eine als "Short Message Service"-Nachricht ausgebildete Kurznachricht (KN) eingefügt werden, wobei die Kurznachricht (KN) auf Anweisung des Multimedianachrichtendienstzentrum (MMNDZ) von einem Kurznachrichtendienstzentrum (KNDZ) an das Telekommunikationsgerät (ETKG) gesendet wird.

9. Verfahren nach Anspruch 7 oder 8, **dadurch gekennzeichnet, dass**
das Kurznachrichtendienstzentrum (KNDZ) durch das Multimedianachrichtendienstzentrum (MMNDZ) angewiesen wird, indem die Mitteilungsnachricht (MN) von dem Multimedianachrichtendienstzentrum (MMNDZ) an das Kurznachrichtendienstzentrum (KNDZ) gesendet wird.

10. Verfahren nach Anspruch 1, **dadurch gekennzeichnet, dass**
die Mitteilungsnachricht (MN) durch In-Band-Signalisierung übertragen wird.

11. Verfahren nach Anspruch 10, **dadurch gekennzeichnet, dass**
die In-Band-Signalisierung durch eine FSK-Übertragung oder DTMF-Übertragung erfolgt.

12. Verfahren nach Anspruch 1, **dadurch gekennzeichnet, dass**
die Informationssitzung (IS) gemäß einem Modem-Protokoll oder Faksimile-Protokoll durchgeführt wird.

13. Verfahren nach Anspruch 1, **dadurch gekennzeichnet, dass**
die Abholsitzung (AS) gemäß einem TCP/IP-Protokoll, WSP-Protokoll, Modem-Protokoll oder Faksimile-Protokoll durchgeführt wird.

14. Verfahren nach Anspruch 1 **dadurch gekennzeichnet, dass**
mit der Multimedianachricht (MMN) Audio-, Video- und/oder Textdaten übertragen werden.

15. Multimedianachrichtendienstzentrum zum Zustellen einer Multimedianachricht an ein als Multimedianachrichtensenke ausgebildetes Telekommunikationsgerät, das als Multimedianachrichtenquelle
a) eine Zentrale Steuereinheit (ZST) aufweist, die die Bedienungs- und Funktionsabläufe in dem Multimedianachrichtendienstzentrum (MMNDZ) steuert und der eine Hinterlegungsstelle (HLS) zum Hinterlegen der Multimedianachrichten zugeordnet ist,
b) eine Empfangseinrichtung (EME) zum Empfangen von Multimedianachrichten aufweist, die die an das Telekommunikationsgerät (ETKG) zuzustellende Multimedianachricht (MMN) empfängt und zu deren Weiterleitung an die Zentrale Steuereinheit (ZST) mit dieser verbunden ist,
c) der Zentralen Steuereinheit (ZST) zugeordnete Registrierungsmittel (RM) aufweist, die die in der Zentralen Steuereinheit (ZST) eingetroffene Multimedianachricht (MMN) bei der Hinterlegungsstelle (HLS) speichern,
d) der Zentralen Steuereinheit (ZST) zugeordnete Mittel zur Erzeugung von Mitteilungsnachrichten (MNEM) aufweist, die bezüglich der in der Zentralen Steuereinheit (ZST) eingetroffenen Multimedianachricht (MMN) eine Mitteilungsnachricht (MN) erzeugen, und
e) eine Sendeempfangseinrichtung (SEE) zum Senden und Empfangen von Nachrichten aufweist, die mit der Zentralen Steuereinheit (ZST) verbunden ist, über diese Verbindung von der Zentralen Steuereinheit (ZST) die Mitteilungsnachricht (MN) erhält und diese unmittelbar oder mittelbar an das Telekommunikationsgerät (ETKG) sendet, um das Telekommunikationsgerät (ETKG) über die hinterlegte Multimedianachricht (MMN) zu informieren, wobei
e1) die Sendeempfangseinrichtung SEE) dazu eingerichtet ist, für das Senden der Mitteilungsnachricht (MN) eine Nutzkanalverbindung (NKV) unmittelbar oder mittelbar zu dem Telekommunikationsgerät (ETKG) aufzubauen, über die die Mitteilungsnachricht (MN) in einer Informationssitzung (IS) übertragen wird und
e2) die Informationssitzung (IS) mit der Übertragung der Mitteilungsnachricht (MN) beendet ist,
**dadurch gekennzeichnet, dass**
g) ein der Zentralen Steuereinheit (ZST) zugeordneter Einwahlknoten (EWK) vorhanden ist und eine aus der Zentralen Steuereinheit (ZST), dem Einwahlknoten (EWK) und der Sendeempfangseinrichtung (SEE) gebildete Funktionseinheit derart ausgebildet ist, dass die aufgebaute Nutzkanalverbindung (NKV) zu dem Telekommunikationsgerät (ETKG) mindestens solange aufgebaut bleibt, bis das Telekommunikationsgerät (ETKG) die empfangene Mitteilungsnachricht (MN) ausgewertet und im Rahmen einer Abholsitzung (AS) den Nachrichteninhalt der für das Telekommunikationsgerät (ETKG) bestimmten Multimedianachricht (MMN) beim Multimedianachrichtendienstzentrum (MMNDZ) über die Nutzkanalverbindung (NKV) abgeholt hat.

16. Multimedianachrichtendienstzentrum nach Anspruch 15,
**dadurch gekenntzeichnet**, dass
die Sendeempfangseinrichtung (SEE) dazu eingerichtet ist, in der Informationssitzung (IS) dem Telekommunikationsgerät (ETKG) zu signalisieren, dass die Nutzkanalverbindung (NKV) für eine vorgegebene Zeit, die für die Auswertung der Mitteilungsnachricht (MN) und die für die Dauer der Abholsitzung (AS) ausreicht, aufgebaut bleibt.

17. Multimedianachrichtendienstzentrum nach Anspruch 16,
**dadurch gekennzeichnet, dass**
die Zentrale Steuereinheit (ZST) und die Sendeempfangseinrichtung (SEE) dazu eingerichtet sind, bei der Signalisierung
a) ein spezielles Informationselement (IE) eines für die Übertragung der Mitteilungsnachricht verwendeten Informationselementcontainer zu erzeugen, das mit der Mitteilungsnachricht (MN) übertragen wird oder
b) eine separate Meldung (MD) zu erzeugen, die getrennt von der Mitteilungsnachricht (MN) übertragen wird.

18. Multimedianachrichtendienstzentrum nach Anspruch 15,
**dadurch gekennzeichnet, dass**
die die Zentrale Steuereinheit (ZST) und die Sendeempfangseinrichtung (SEE) dazu eingerichtet sind, die Nutzkanalverbindung (NKV), wenn das Telekommunikationsgerät (ETKG) in der Informationssitzung (IS) dem Multimedianachrichtendienstzentrum (MMNDZ) signalisiert, dass die Nutzkanalverbindung (NKV) für eine vorgegebene Zeit, die für die Auswertung der Mitteilungsnachricht (MN) und die für die Dauer der Abholsitzung (AS) ausreicht, aufgebaut bleiben soll, nicht abzubauen.

19. Multimedianachrichtendienstzentrum nach Anspruch 18,
**dadurch gekennzeichnet, dass**
die Sendeempfangseinrichtung (SEE) dazu eingerichtet ist, während der Signalisierung ein Meldungsaustausch (MA) zwischen dem Telekommunikationsgerät (ETKG) und dem Multimedianachrichtendienstzentrum (MMNDZ) mit einer von dem Telekommunikationsgerät (ETKG) gesendeten und von der Sendeempfangseinrichtung (SEE) empfangenen Anfragemeldung (AM) und einer von der Sendeempfangseinrichtung (SEE) an das Telekommunikationsgerät (ETKG) gesendeten Bestätigungsmeldung (BM) durchzuführen.

20. Multimedianachrichtendienstzentrum nach Anspruch 15,
**dadurch gekennzeichnet, dass**
die Mitteilungsnachricht (MN) in eine als "Short Message Service"-Nachricht ausgebildete Kurznachricht (KN) eingefügt ist und das Multimedianachrichtendienstzentrum (MMNDZ) mit einem Kurznachrichtendienstzentrum (KNDZ) verbunden ist, um die Kurznachricht (KN) auf Anweisung des Multimedianachrichtendienstzentrum (MMNDZ) von einem Kurznachrichtendienstzentrum (KNDZ) an das Telekommunikationsgerät (ETKG) zu senden.

21. Multimedianachrichtendienstzentrum nach Anspruch 15,
**dadurch gekennzeichnet, dass**
die Mitteilungsnachricht (MN) in einer "Wireless Application Protocol-Push"-Nachricht und die "Wireless Application Protocol-Push"-Nachricht in eine als "Short Message Service"-Nachricht ausgebildete Kurznachricht (KN) eingefügt ist und das Multimedianachrichtendienstzentrum (MMNDZ) mit einem Kurznachrichtendienstzentrum (KNDZ) verbunden ist, um die Kurznachricht (KN) auf Anweisung des Multimedianachrichtendienstzentrum (MMNDZ) von einem Kurznachrichtendienstzentrum (KNDZ) an das Telekommunikationsgerät (ETKG) zu senden.

22. Multimedianachrichtendienstzentrum nach Anspruch 20 oder 21, **dadurch gekennzeichnet, dass**
die Sendeempfangseinrichtung (SEE) dazu eingerichtet ist, das Kurznachrichtendienstzentrum (KNDZ) durch das Multimedianachrichtendienstzentrum (MMNDZ) anzuweisen, die Mitteilungsnachricht (MN) von dem Multimedianachrichtendienstzentrum (MMNDZ) an das Kurznachrichtendienstzentrum (KNDZ) zu senden.

23. Multimedianachrichtendienstzentrum nach Anspruch 15,
**dadurch gekennzeichnet, dass**
die Sendeempfangseinrichtung (SEE) dazu eingerichtet ist, die Mitteilungsnachricht (MN) durch In-Band-Signalisierung zu übertragen.

24. Multimedianachrichtendienstzentrum nach Anspruch 23,
**dadurch gekennzeichnet, dass**
die Sendeempfangseinrichtung (SEE) dazu eingerichtet ist, die In-Band-Signalisierung durch eine FSK-Übertragung oder DTMF-Übertragung durchzuführen.

25. Multimedianachrichtendienstzentrum nach Anspruch 15,
**dadurch gekennzeichnet, dass**
die Sendeempfangseinrichtung (SEE) dazu eingerichtet ist, die Informationssitzung (IS) gemäß einem Modem-Protokoll oder Faksimile-Protokoll durchzuführen.

26. Multimedianachrichtendienstzentrum nach Anspruch 15,
**dadurch gekennzeichnet, dass**
der Einwahlknoten (EWK) dazu eingerichtet ist, die Abholsitzung (AS) gemäß einem TCP/IP-Protokoll, WSP-Protokoll, Modem-Protokoll oder Faksimile-Protokoll durchzuführen.

27. Multimedianachrichtendienstzentrum nach Anspruch 15,
**dadurch gekennzeichnet, dass**
die Multimedianachricht (MMN) Audio-, Video- und/oder Textdaten aufweist.

28. Telekommunikationsgerät zum Zugreifen auf bei einer Hinterlegungsstelle eines Multimedianachrichtendienstzentrums hinterlegte Multimedianachrichten, das
a) eine Zentrale Steuereinrichtung (ZSTE) zur Steuerung der Bedienungs- und Funktionsabläufe in dem Telekommunikationsgerät (ETKG) aufweist,
b) eine Abholeinrichtung (AHE) zum Abholen von Nachrichten und/oder Informationen aufweist, der mit der Zentralen Steuereinrichtung (ZSTE) verbunden ist
c) einen Sendeempfänger (SEM) zum Senden und Empfangen von Nachrichten aufweist, der eine von dem Multimedianachrichtendienstzentrum (MMNDZ) unmittelbar oder mittelbar an das Telekommunikationsgerät (ETKG) gesendeten Mitteilungsnachricht (MN) empfängt, der mit der Zentralen Steuereinrichtung (ZSTE) verbunden ist und der zur Information des Telekommunikationsgeräts (ETKG) über eine in dem Multimedianachrichtendienstzentrum (MMNDZ) für das Telekommunikationsgerät (ETKG) hinterlegte Multimedianachricht (MMN) die Mitteilungsnachricht (MN) an die Zentrale Steuereinrichtung (ZSTE) weiterleitet, wobei
c1) der Sendeempfänger (SEM) für das Empfangen der von dem Multimedianachrichtendienstzentrum (MMNDZ) in einer Informationssitzung (IS) übertragenen Mitteilungsnachricht (MN) über eine von dem Multimedianachrichtendienstzentrum (MMNDZ) aufgebaute Nutzkanalverbindung (NKV) mit dem Multimedianachrichtendienstzentrum (MMNDZ) unmittelbar oder mittelbar verbunden ist und
c2) die Informationssitzung (IS) mit der Übertragung der Mitteilungsnachricht (MN) beendet ist,
**dadurch gekennzeichnet, dass**
d) der Zentralen Steuerungseinrichtung (ZSTE) zugeordnete Auswertemittel (AWM) vorhanden sind, die dazu eingerichtet sind, die von dem Sendeempfänger (SEM) über die Nutzkanalverbindung (NKV) empfangene und an die Zentrale Steuerungseinrichtung (ZSTE) weitergeleitete Mitteilungsnachricht (MN) auszuwerten,
e) die Abholeinrichtung (AHE) und die Zentrale Steuerungseinrichtung (ZSTE) mit den zugeordneten Auswertemitteln (AWM) eine Funktionseinheit bilden, die derart ausgebildet ist, dass die aufgebaute Nutzkanalverbindung (NKV) zu dem Telekommunikationsgerät (ETKG) mindestens solange aufgebaut bleibt, bis die Auswertemittel (AWM) die empfangene Mitteilungsnachricht (MN) ausgewertet haben und die Zentrale Steuerungseinrichtung (ZSTE) gemäß der ausgewerteten Mitteilungsnachricht (MN) über die Abholeinrichtung (AHE) im Rahmen einer Abholsitzung (AS) den Nachrichteninhalt der für das Telekommunikationsgerät (ETKG) bestimmten Multimedianachricht (MMN) beim Multimedianachrichtendienstzentrum (MMNDZ) über die Nutzkanalverbindung (NKV) abgeholt hat.

29. Telekommunikationsgerät nach Anspruch 28, **dadurch gekennzeichnet , dass**
der Sendeempfänger (SEM), die Abholeinrichtung (AHE) und die Zentrale Steuerungseinrichtung (ZSTE) mit den zugeordneten Auswertemitteln (AWM) dazu eingerichtet sind, die Abholeinrichtung (AHE), wenn in der Informationssitzung (IS) dem Telekommunikationsgerät (ETKG) signalisiert wird, dass die Nutzkanalverbindung (NKV) für eine vorgegebene Zeit, die für die Auswertung der Mitteilungsnachricht (MN) und die für die Dauer der Abholsitzung (AS) ausreicht, aufgebaut bleibt, unmittelbar von der Zentralen Steuerungseinrichtung (ZSTE) ohne eine separate Nutzkanalverbindung aufzubauen zu aktivieren.

30. Telekommunikationsgerät nach Anspruch 29, **dadurch gekennzeichnet, dass**
die der Zentralen Steuerungseinrichtung (ZSTE) zugeordneten Auswertemittel (AWM) dazu eingerichtet sind, während der Signalisierung
a) ein von dem Multimedianachrichtendienstzentrum (MMNDZ) mit der Mitteilungsnachricht (MN) übertragenes, spezielles Informationselement (IE) eines für die Übertragung der Mitteilungsnachricht verwendeten Informationselementcontainer zu erkennen und auszuwerten oder
b) eine von dem Multimedianachrichtendienstzentrum (MMNDZ) getrennt von der Mitteilungsnachricht (MN) übertragene, separate Meldung (MD) zu erkennen und auszuwerten.

31. Telekommunikationsgerät nach Anspruch 28, **dadurch gekennzeichnet , dass**
der Sendeempfänger (SEM) dazu eingerichtet ist, dem Multimedianachrichtendienstzentrum (MMNDZ) in der Informationssitzung (IS) zu signalisieren, dass die Nutzkanalverbindung (NKV) für eine vorgegebene Zeit, die für die Auswertung der Mitteilungsnachricht (MN) und die für die Dauer der Abholsitzung (AS) ausreicht, aufgebaut bleiben soll.

32. Telekommunikationsgerät nach Anspruch 31, **dadurch gekennzeichnet, dass**
der Sendeempfänger (SEM) dazu eingerichtet ist, während der Signalisierung einen Meldungsaustausch (MA) zwischen dem Telekommunikationsgerät (ETKG) und dem Multimedianachrichtendienstzentrum (MMNDZ) mit einer von dem Sendeempfänger (SEM) an das Multimedianachrichtendienstzentrum (MMNDZ) gesendeten Anfragemeldung (AM) und einer von dem Multimedianachrichtendienstzentrum (MMNDZ) gesendeten und von dem Sendeempfänger (SEM) empfangenen Bestätigungsmeldung (BM) durchzuführen.

33. Telekommunikationsgerät nach Anspruch 28, 29, oder 31,
**dadurch gekennzeichnet, dass**
die Zentrale Steuerungseinrichtung (ZSTE) dazu eingerichtet ist, über den Sendeempfänger (SEM) die aufgebaute Nutzkanalverbindung (NKV) zu trennen, falls das Telekommunikationsgerät (ETKG) beabsichtigt, in der Zeit, wo die Nutzkanalverbindung (NKV) aufgebaut ist, keine Abholsitzung (AS) zu beginnen.

34. Telekommunikationsgerät nach Anspruch 28, **dadurch gekennzeichnet, dass**
die Mitteilungsnachricht (MN) in eine als "Short Message Service"-Nachricht ausgebildete Kurznachricht (KN) eingefügt ist und das Telekommunikationsgerät (ETKG) mit einem Kurznachrichtendienstzentrum (KNDZ) verbunden ist, das auf Anweisung des Multimedianachrichtendienstzentrum (MMNDZ) die Kurznachricht (KN) an das Telekommunikationsgerät (ETKG) sendet.

35. Telekommunikationsgerät nach Anspruch 28, **dadurch gekennzeichnet , dass**
die Mitteilungsnachricht (MN) in einer "Wireless Application Protocol-Push"-Nachricht und die "Wireless Application Protocol-Push"-Nachricht in eine als "Short Message Service"-Nachricht ausgebildete Kurznachricht (KN) eingefügt ist und das Telekommunikationsgerät (ETKG) mit einem Kurznachrichtendienstzentrum (KNDZ) verbunden ist, das auf Anweisung des Multimedianachrichtendienstzentrum (MMNDZ) die Kurznachricht (KN) an das Telekommunikationsgerät (ETKG) sendet.

36. Telekommunikationsgerät nach Anspruch 28, **dadurch gekennzeichnet, dass**
der Sendeempfänger (SEM) dazu eingerichtet ist, die Mitteilungsnachricht (MN) durch In-Band-Signalisierung zu übertragen d.

37. Telekommunikationsgerät nach Anspruch 36, **dadurch gekennzeichnet , dass**
der Sendeempfänger (SEM) dazu eingerichtet ist, die In-Band-Signalisierung durch eine FSK-Übertragung oder DTMF-Übertragung durchzuführen.

38. Telekommunikationsgerät nach Anspruch 28, **dadurch gekennzeichnet, dass**
der Sendeempfänger (SEM) dazu eingerichtet ist, die Informationssitzung (IS) gemäß einem Modem-Protokoll oder Faksimile-Protokoll durchzuführen.

39. Telekommunikationsgerät nach Anspruch 28, **dadurch gekennzeichnet, dass**
die Abholeinrichtung (AHE) dazu eingerichtet ist, die Abholsitzung (AS) gemäß einem TCP/IP-Protokoll, WSP-Protokoll, Modem-Protokoll, PPP-Protokoll oder Faksimile-Protokoll durchzuführen.

40. Telekommunikationsgerät nach Anspruch 28 **dadurch gekennzeichnet, dass**
das Telekommunikationsgerät (ETKG) ein Festnetz- oder ein Mobilfunkgerät, insbesondere ein Schnurlos-Mobilteil, ein Personal Computer oder ein Faksimilegerät ist.

41. Telekommunikationsgerät nach Anspruch 28, **dadurch gekennzeichnet, dass**
die Multimedianachricht (MMN) Audio-, Video- und/oder Textdaten aufweist.

## Claims

1. Method for delivering a multimedia message to a telecommunication device configured as a multimedia message sink, in which
a) the multimedia message (MMN) is transmitted to and stored in a multimedia message service centre (MMNDZ) configured as a multimedia message source for delivering the multimedia message (MMN) to the telecommunication device (ETKG),
b) the multimedia message service centre (MMNDZ) directly or indirectly sends the telecommunication device (ETKG) an information message (MN) informing the telecommunication device (ETKG) about the stored multimedia message (MMN),
c) for sending the information message (MN) a traffic channel connection (NKV) to the telecommunication device (ETKG) is directly or indirectly established and used to transmit the information message (MN) in an information session (IS),
d) upon the transmission of the information message (MN) the information session (IS) is terminated,
**characterised in that**
e) the traffic channel connection (NKV) established to the telecommunication device (ETKG) remains established at least until the telecommunication device (ETKG) has analyzed the received information message (MN) and in the context of a fetching session (AS) has retrieved the content of the multimedia message (MMN) intended for the telecommunication device (ETKG) from the multimedia message service centre (MMNDZ) via the traffic channel connection (NKV).

2. Method according to claim 1, **characterised in that** the multimedia message service centre (MMNDZ) signals to the telecommunication device (ETKG) in the information session (IS) that the traffic channel connection (NKV) remains established for a specified time which is sufficient for the analysis of the information message (MN) and for the duration of the fetching session (AS).

3. Method according to claim 2, **characterised in that** the signalling with the transmission of the information message (MN) takes place with the aid of a special information element (IE) of an information element container used for the transmission of the information message or with the aid of a message (MD) which is separate from the transmission of the information message (MN).

4. Method according to claim 1, **characterised in that** the telecommunication device (ETKG) signals to the multimedia message service centre (MMNDZ) in the information session (IS) that it wishes the traffic channel connection (NKV) to remain established for a specified time which is sufficient for the analysis of the information message (MN) and for the duration of the fetching session (AS).

5. Method according to claim 4, **characterised in that** the signalling takes place with the aid of an exchange of messages (MA) between the telecommunication device (ETKG) and the multimedia message service centre (MMNDZ) with a query message (AM) sent by the telecommunication device (ETKG) and an acknowledge message (BM) sent by the multimedia message service centre (MMNDZ).

6. Method according to claim 1, 2, or 4, **characterised in that** the established traffic channel connection (NKV) is cleared down if the telecommunication device (ETKG) does not intend to start a fetching session (AS) at the time when the traffic channel connection (NKV) is established.

7. Method according to claim 1, **characterised in that** the information message (MN) is inserted into a short message (KN) configured as a short message service message, the short message (KN) being sent by order of the multimedia message service centre (MMNDZ) from a short message service centre (KNDZ) to the telecommunication device (ETKG).

8. Method according to claim 1, **characterised in that** the information message (MN) is inserted in a wireless application protocol push message and the wireless application protocol push message is inserted into a short message (KN) configured as a short message service message, the short message (KN) being sent by order of the multimedia message service centre (MMNDZ) from a short message service centre (KNDZ) to the telecommunication device (ETKG).

9. Method according to claim 7 or 8, **characterised in that** the short message service centre (KNDZ) is instructed by the multimedia message service centre (MMNDZ) when the information message (MN) is sent by the multimedia message service centre (MMNDZ) to the short message service centre (KNDZ).

10. Method according to claim 1, **characterised in that** the information message (MN) is transmitted with the aid of in-band signalling.

11. Method according to claim 10, **characterised in that** the in-band signalling uses FSK transmission or DTMF transmission.

12. Method according to claim 1, **characterised in that** the information session (IS) is carried out according to a modem protocol or a facsimile protocol.

13. Method according to claim 1, **characterised in that** the fetching session (AS) is carried out according to a TCP/IP protocol, a WSP protocol, a modem protocol or a facsimile protocol.

14. Method according to claim 1, **characterised in that** audio, video and/or text data are transmitted with the multimedia message (MMN).

15. Multimedia message service centre for delivering a multimedia message to a telecommunication device configured as a multimedia message sink, which as a multimedia message source
a) has a central control unit (ZST) which controls the operating and function sequences in the multimedia message service centre (MMNDZ), and to which a storage location (HLS) for storing the multimedia messages is assigned,
b) has a receiving device (EME), for receiving multimedia messages, which receives the multimedia message (MMN) to be delivered to the telecommunication device (ETKG), and is connected to the central control unit (ZST) for the purpose of forwarding said message to it,
c) has registration means (RM), assigned to the central control unit (ZST), which store the multimedia message (MMN) that has arrived in the central control unit (ZST) at the storage location (HLS),
d) has information message generation means (MNEM), assigned to the central control unit (ZST), which generate an information message (MN) concerning the multimedia message (MMN) that has arrived in the central control unit (ZST), and
e) has a transmitting and receiving device (SEE), for transmitting and receiving messages, which is connected to the central control unit (ZST), receives the information message (MN) from the central control unit (ZST) via this connection and sends said message directly or indirectly to the telecommunication device (ETKG) in order to inform the telecommunication device (ETKG) about the stored multimedia message (MMN), such that
e1) the transmitting and receiving device (SEE) is configured so that, for sending the information message (MN), a traffic channel connection (NKV) to the telecommunication device (ETKG) is directly or indirectly established and used to transmit the information message (MN) in an information session (IS), and
e2) upon the transmission of the information message (MN) the information session (IS) is terminated,
**characterised in that**
g) there is a log-in node (EWK) assigned to the central control unit (ZST) and a function unit formed from the central control unit (ZST), the log-in node (EWK) and the transmitting and receiving device (SEE) is configured so that the traffic channel connection (NKV) established to the telecommunication device (ETKG) remains established at least until the telecommunication device (ETKG) has analyzed the received information message (MN) and in the context of a fetching session (AS) has retrieved the content of the multimedia message (MMN) intended for the telecommunication device (ETKG) from the multimedia message service centre (MMNDZ) via the traffic channel connection (NKV).

16. Multimedia message service centre according to claim 15,
**characterised in that**
the transmitting and receiving device (SEE) is configured so that in the information session (IS) it is signalled to the telecommunication device (ETKG) that the traffic channel connection (NKV) remains established for a specified time which is sufficient for the analysis of the information message (MN) and for the duration of the fetching session (AS).

17. Multimedia message service centre according to claim 16,
**characterised in that**
the central control unit (ZST) and the transmitting and receiving device (SEE) are configured so that during signalling
a) a special information element (IE) of an information element container used for the transmission of the information message is generated and transmitted together with the information message (MN), or
b) a separate message (MD) is generated and transmitted separately from the information message (MN).

18. Multimedia message service centre according to claim 15,
**characterised in that**
the central control unit (ZST) and the transmitting and receiving device (SEE) are configured so that when the telecommunication device (ETKG) in the information session (IS) signals to the multimedia message service centre (MMNDZ) that it wishes the traffic channel connection (NKV) to remain established for a specified time which is sufficient for the analysis of the information message (MN) and for the duration of the fetching session (AS), the traffic channel connection (NKV) will not be cleared down.

19. Multimedia message service centre according to claim 18,
**characterised in that**
the transmitting and receiving device (SEE) is configured so that during signalling an exchange of messages (MA) takes place between the telecommunication device (ETKG) and the multimedia message service centre (MMNDZ) with a query message (AM) being sent by the telecommunication device (ETKG) and received by the transmitting and receiving device (SEE), and an acknowledge message (BM) being sent by the transmitting and receiving device (SEE) to the telecommunication device (ETKG).

20. Multimedia message service centre according to claim 15,
**characterised in that**
the information message (MN) is inserted into a short message (KN) configured as a short message service message, and the multimedia message service centre (MMNDZ) is connected to a short message service centre (KNDZ), so that the short message (KN) is sent by order of the multimedia message service centre (MMNDZ) from a short message service centre (KNDZ) to the telecommunication device (ETKG).

21. Multimedia message service centre according to claim 15,
**characterised in that**
the information message (MN) is inserted in a wireless application protocol push message, the wireless application protocol push message is inserted into a short message (KN) configured as a short message service message, and the multimedia message service centre (MMNDZ) is connected to a short message service centre (KNDZ), so that the short message (KN) is sent by order of the multimedia message service centre (MMNDZ) from a short message service centre (KNDZ) to the telecommunication device (ETKG).

22. Multimedia message service centre according to claim 20 or 21, **characterised in that**
the transmitting and receiving device (SEE) is configured so that the short message service centre (KNDZ) is instructed by the multimedia message service centre (MMNDZ) when the information message (MN) is sent by the multimedia message service centre (MMNDZ) to the short message service centre (KNDZ).

23. Multimedia message service centre according to claim 15,
**characterised in that**
the transmitting and receiving device (SEE) is configured so that the information message (MN) is transmitted with the aid of in-band signalling.

24. Multimedia message service centre according to claim 23,
**characterised in that**
the transmitting and receiving device (SEE) is configured so that the in-band signalling uses FSK transmission or DTMF transmission.

25. Multimedia message service centre according to claim 15,
**characterised in that**
the transmitting and receiving device (SEE) is configured so that the information session (IS) is carried out according to a modem protocol or a facsimile protocol.

26. Multimedia message service centre according to claim 15,
**characterised in that**
the log-in node (EWK) is configured so that the fetching session (AS) is carried out according to a TCP/IP protocol, a WSP protocol, a modem protocol or a facsimile protocol.

27. Multimedia message service centre according to claim 15,
**characterised in that**
the multimedia message (MMN) contains audio, video and/or text data.

28. Telecommunication device for accessing multimedia messages stored in a storage location of a multimedia message service centre, which
a) has a central control device (ZSTE) for controlling the operating and function sequences in the telecommunication device (ETKG),
b) has a fetching device (AHE) for retrieving messages and/or information, said device being connected to the central control device (ZSTE),
c) has a transmitter/receiver (SEM) for transmitting and receiving messages, which receives an information message (MN) transmitted directly or indirectly by the multimedia message service centre (MMNDZ) to the telecommunication device (ETKG), and which is connected to the central control device (ZSTE), and which forwards the information message (MN) to the central control device (ZSTE) in order to inform the telecommunication device (ETKG) about a multimedia message (MMN) stored in the multimedia message service centre (MMNDZ) for the said telecommunication device (ETKG), such that
c1) the transmitter/receiver (SEM) for receiving the information message (MN) transmitted by the multimedia message service centre (MMNDZ) in an information session (IS) is connected directly or indirectly to the multimedia message service centre (MMNDZ) via a traffic channel connection (NKV) established by the multimedia message service centre (MMNDZ), and
c2) upon the transmission of the information message (MN) the information session (IS) is terminated,
**characterised in that**
d) there are means of analysis (AWM) assigned to the central control device (ZSTE) which are configured so that the information message (MN) received by the transmitter/receiver (SEM) via the traffic channel connection (NKV) and forwarded to the central control device (ZSTE) is analyzed,
e) the fetching device (AHE) and the central control device (ZSTE) together with the assigned means of analysis (AWM) form a function unit which is configured so that the traffic channel connection (NKV) established to the telecommunication device (ETKG) remains established at least until the means of analysis (AWM) have analyzed the received information message (MN), and the central control device (ZSTE) has retrieved the content of the multimedia message (MMN) intended for the telecommunication device (ETKG) from the multimedia message service centre (MMNDZ) via the traffic channel connection (NKV) in the context of a fetching session (AS) via the fetching device (AHE) in accordance with the analyzed information message (MN).

29. Telecommunication device according to claim 28,
**characterised in that**
the transmitter/receiver (SEM), the fetching device (AHE) and the central control device (ZSTE) together with the assigned means of analysis (AWM) are configured so that when in the information session (IS) it is signalled to the telecommunication device (ETKG) that the traffic channel connection (NKV) remains established for a specified time which is sufficient for the analysis of the information message (MN) and for the duration of the fetching session (AS), the fetching device (AHE) is activated immediately by the central control device (ZSTE) without establishing a separate traffic channel connection.

30. Telecommunication device according to claim 29,
**characterised in that**
the means of analysis (AWM) assigned to the central control device (ZSTE) are configured so that during signalling
a) a special information element (IE) of an information element container used for the transmission of the information message, transmitted by the multimedia message service centre (MMNDZ) together with the information message (MN), is detected and analyzed, or
b) a separate message (MD), transmitted by the multimedia message service centre (MMNDZ) separately from the information message (MN), is detected and analyzed.

31. Telecommunication device according to claim 28,
**characterised in that**
the transmitter/receiver (SEM) is configured so that in the information session (IS) it is signalled to the multimedia message service centre (MMNDZ) that the traffic channel connection (NKV) is required to remain established for a specified time which is sufficient for the analysis of the information message (MN) and for the duration of the fetching session (AS).

32. Telecommunication device according to claim 31,
**characterised in that**
the transmitter/receiver (SEM) is configured so that during signalling an exchange of messages (MA) takes place between the telecommunication device (ETKG) and the multimedia message service centre (MMNDZ) with a query message (AM) being sent by the transmitter/receiver (SEM) to multimedia message service centre (MMNDZ), and an acknowledge message (BM) being sent by the multimedia message service centre (MMNDZ) and received by the transmitter/receiver (SEM).

33. Telecommunication device according to claim 28, 29, or 31,
**characterised in that**
the central control device (ZSTE) is configured so that, with the aid of the transmitter/receiver (SEM), the established traffic channel connection (NKV) is cleared down if the telecommunication device (ETKG) does not intend to start a fetching session (AS) at the time when the traffic channel connection (NKV) is established.

34. Telecommunication device according to claim 28,
**characterised in that**
the information message (MN) is inserted into a short message (KN) configured as a short message service message, and the telecommunication device (ETKG) is connected to a short message service centre (KNDZ) which, by order of the multimedia message service centre (MMNDZ), sends the short message (KN) to the telecommunication device (ETKG).

35. Telecommunication device according to claim 28,
**characterised in that**
the information message (MN) is inserted in a wireless application protocol push message, the wireless application protocol push message is inserted into a short message (KN) configured as a short message service message, and the telecommunication device (ETKG) is connected to a short message service centre (KNDZ) which, by order of the multimedia message service centre (MMNDZ), sends the short message (KN) to the telecommunication device (ETKG).

36. Telecommunication device according to claim 28,
**characterised in that**
the transmitter/receiver (SEM) is configured so that the information message (MN) is transmitted with the aid of in-band signalling.

37. Telecommunication device according to claim 36,
**characterised in that**
the transmitter/receiver (SEM) is configured so that the in-band signalling uses FSK transmission or DTMF transmission.

38. Telecommunication device according to claim 28,
**characterised in that**
the transmitter/receiver (SEM) is configured so that the information session (IS) is carried out according to a modem protocol or a facsimile protocol.

39. Telecommunication device according to claim 28,
**characterised in that**
the fetching device (AHE) is configured so that the fetching session (AS) is carried out according to a TCP/IP protocol, a WSP protocol, a modem protocol, a PPP protocol or a facsimile protocol.

40. Telecommunication device according to claim 28,
**characterised in that**
the telecommunication device (ETKG) is a fixed-network or mobile-radio device, in particular a cordless mobile handset, a personal computer or a facsimile machine.

41. Telecommunication device according to claim 28,
**characterised in that**
the multimedia message (MMN) contains audio, video and/or text data.

## Revendications

1. Procédé pour remettre un message multimédia à un appareil de télécommunication se présentant sous la forme d'un collecteur de messages multimédias, dans lequel :
a) le message multimédia (MMN) est transmis à un centre de services de messages multimédias (MMNDZ) se présentant sous la forme d'une source de messages multimédias pour la remise du message multimédia (MMN) à l'appareil de télécommunication (ETKG) et y est déposé ;
b) le centre de services de messages multimédias (MMNDZ) envoie à l'appareil de télécommunication (ETKG), directement ou indirectement, un message d'information (MN) par lequel il informe l'appareil de télécommunication (ETKG) du message multimédia (MMN) déposé ;
c) une liaison de canal utile (NKV) vers l'appareil de télécommunication (ETKG), via laquelle le message d'information (MN) est transmis pendant une session d'information (IS), est établie directement ou indirectement pour l'émission du message d'information (MN),
d) la session d'information (IS) se termine avec la transmission du message d'information (MN),
**caractérisé en ce que**
e) la liaison de canal utile (NKV) établie vers l'appareil de télécommunication (ETKG) reste établie au moins jusqu'à ce que l'appareil de télécommunication (ETKG) ait évalué le message d'information (MN) reçu et ait, dans le cadre d'une session de récupération (AS), récupéré, via la liaison de canal utile (NKV), le contenu du message multimédia (MMN) destiné à l'appareil de télécommunication (ETKG) auprès du centre de services de messages multimédias (MMNDZ).

2. Procédé selon la revendication 1, **caractérisé en ce que** le centre de services de messages multimédias (MMNDZ), pendant la session d'information (IS), signale à l'appareil de télécommunication (ETKG) que la liaison de canal utile (NKV) reste établie pour un temps prédéterminé qui suffit pour l'évaluation du message d'information (MN) et pour la durée de la session de récupération (AS).

3. Procédé selon la revendication 2, **caractérisé en ce que** la signalisation s'effectue avec la transmission du message d'information (MN) par un élément d'information spécial (IE) d'un conteneur d'éléments d'information utilisé pour la transmission du message d'information ou par un message (MD) séparé qui est séparé de la transmission du message d'information (MN).

4. Procédé selon la revendication 1, **caractérisé en ce que** l'appareil de télécommunication (ETKG), pendant la session d'information (IS), signale au centre de services de messages multimédias (MMNDZ) que la liaison de canal utile (NKV) doit rester établie pour un temps prédéterminé qui suffit pour l'évaluation du message d'information (MN) et pour la durée de la session de récupération (AS).

5. Procédé selon la revendication 4, **caractérisé en ce que** la signalisation s'effectue par un échange de messages (MA) entre l'appareil de télécommunication (ETKG) et le centre de services de messages multimédias (MMNDZ) avec un message de requête (AM) émis par l'appareil de télécommunication (ETKG) et un message de confirmation (BM) émis par le centre de services de messages multimédias (MMNDZ).

6. Procédé selon la revendication 1, 2 ou 4, **caractérisé en ce que** la liaison de canal utile (NKV) établie est coupée si l'appareil de télécommunication (ETKG) envisage de ne pas commencer de session de récupération (AS) dans le temps pendant lequel la liaison de canal utile (NKV) est établie.

7. Procédé selon la revendication 1, **caractérisé en ce que** le message d'information (MN) est inséré dans un message court (KN) qui se présente sous la forme d'un message « Short Message Service », le message court (KN) étant envoyé, sur ordre du centre de services de messages multimédias (MMNDZ), d'un centre de services de messages courts (KNDZ) à l'appareil de télécommunication (ETKG).

8. Procédé selon la revendication 1, **caractérisé en ce que** le message d'information (MN) est inséré dans un message de pousser « Wireless Application Protocol » et le message de pousser « Wireless Application Protocol », dans un message court (KN) qui se présente sous la forme d'un message « Short Message Service », le message court (KN) étant envoyé, sur ordre du centre de services de messages multimédias (MMNDZ), d'un centre de services de messages courts (KNDZ) à l'appareil de télécommunication (ETKG).

9. Procédé selon la revendication 7 ou 8, **caractérisé en ce que** le centre de services de messages courts (KNDZ) reçoit un ordre du centre de services de messages multimédias (MMNDZ) par le fait que le message d'information (MN) est envoyé du centre de services de messages multimédias (MMNDZ) au centre de services de messages courts (KNDZ).

10. Procédé selon la revendication 1, **caractérisé en ce que** le message d'information (MN) est transmis par signalisation en bande.

11. Procédé selon la revendication 10, **caractérisé en ce que** la signalisation en bande s'effectue par une transmission FSK ou une transmission DTMF.

12. Procédé selon la revendication 1, **caractérisé en ce que** la session d'information (IS) est réalisée conformément à un protocole de modem ou un protocole de fax.

13. Procédé selon la revendication 1, **caractérisé en ce que** la session de récupération (AS) est réalisée conformément à un protocole TCP/IP, un protocole WSP, un protocole de modem ou un protocole de fax.

14. Procédé selon la revendication 1, **caractérisé en ce que** sont transmises, avec le message multimédia (MMN), des données audio, vidéo et/ou textuelles.

15. Centre de services de messages multimédias pour la remise d'un message multimédia à un appareil de télécommunication se présentant sous la forme d'un collecteur de messages multimédias, lequel comporte, en tant que source de messages multimédias :
a) une unité de commande centrale (ZST) qui commande les déroulements de commandes et de fonctions dans le centre de services de messages multimédias (MMNDZ) et à laquelle est associé un point de dépôt (HLS) pour le dépôt des messages multimédias ;
b) un dispositif de réception (EME) pour recevoir des messages multimédias, lequel reçoit le message multimédia (MMN) à remettre à l'appareil de télécommunication (ETKG) et est, aux fins de la retransmission de celui-ci à l'unité de commande centrale (ZST), relié à celle-ci ;
c) des moyens d'enregistrement (RM) associés à l'unité de commande centrale (ZST), lesquels stockent au point de dépôt (HLS) le message multimédia (MMN) qui est entré dans l'unité de commande centrale (ZST) ;
d) des moyens, associés à l'unité de commande centrale (ZST), pour générer des messages d'information (MNEM), lesquels moyens génèrent un message d'information (MN) en rapport avec le message multimédia (MMN) qui est entré dans l'unité de commande centrale (ZST) ; et
e) un dispositif émetteur récepteur (SEE) pour émettre et recevoir des messages, lequel est relié à l'unité de commande centrale (ZST), reçoit de l'unité de commande centrale (ZST), via cette liaison, le message d'information (MN) et envoie celui-ci, directement ou indirectement, à l'appareil de télécommunication (ETKG) pour informer l'appareil de télécommunication (ETKG) du message multimédia (MMN) déposé,
e1) le dispositif émetteur récepteur (SEE) étant aménagé pour établir directement ou indirectement, en vue de l'émission du message d'information (MN), une liaison de canal utile (NKV) vers l'appareil de télécommunication (ETKG) via laquelle le message d'information (MN) est transmis pendant une session d'information (IS) ; et
e2) la session d'information (IS) étant terminée avec la transmission du message d'information (MN),
**caractérisé en ce que**
f) un noeud d'accès (EWK) associé à l'unité de commande centrale (ZST) est présent et une unité fonctionnelle constituée de l'unité de commande centrale (ZST), du noeud d'accès (EWK) et du dispositif émetteur récepteur (SEE) est réalisée de manière telle que la liaison de canal utile (NKV) établie vers l'appareil de télécommunication (ETKG) reste établie au moins jusqu'à ce que l'appareil de télécommunication (ETKG) ait évalué le message d'information (MN) reçu et ait, dans le cadre d'une session de récupération (AS), récupéré, via la liaison de canal utile (NKV), le contenu du message multimédia (MMN) destiné à l'appareil de télécommunication (ETKG) auprès du centre de services de messages multimédias (MMNDZ).

16. Centre de services de messages multimédias selon la revendication 15, **caractérisé en ce que** le dispositif émetteur récepteur (SEE) est aménagé pour signaler à l'appareil de télécommunication (ETKG), pendant la session d'information (IS), que la liaison de canal utile (NKV) reste établie pour un temps prédéterminé qui suffit pour l'évaluation du message d'information (MN) et pour la durée de la session de récupération (AS).

17. Centre de services de messages multimédias selon la revendication 16, **caractérisé en ce que** l'unité de commande centrale (ZST) et le dispositif émetteur récepteur (SEE) sont aménagés pour, lors de la signalisation :
a) générer un élément d'information spécial (IE) d'un conteneur d'éléments d'information utilisé pour la transmission du message d'information, lequel élément est transmis avec le message d'information (MN), ou
b) générer un message séparé (MD) qui est transmis séparément du message d'information (MN).

18. Centre de services de messages multimédias selon la revendication 15, **caractérisé en ce que** l'unité de commande centrale (ZST) et le dispositif émetteur récepteur (SEE) sont aménagés pour ne pas fermer la liaison de canal utile (NKV) lorsque l'appareil de télécommunication (ETKG), pendant la session d'information (IS), signale au centre de services de messages multimédias (MMNDZ) que la liaison de canal utile (NKV) doit rester établie pour un temps prédéterminé qui suffit pour l'évaluation du message d'information (MN) et pour la durée de la session de récupération (AS).

19. Centre de services de messages multimédias selon la revendication 18, **caractérisé en ce que** le dispositif émetteur récepteur (SEE) est aménagé pour réaliser, pendant la signalisation, un échange de messages (MA) entre l'appareil de télécommunication (ETKG) et le centre de services de messages multimédias (MMNDZ) avec un message de requête (AM) émis par l'appareil de télécommunication (ETKG) et reçu par le dispositif émetteur récepteur (SEE) et un message de confirmation (BM) envoyé par le dispositif émetteur récepteur (SEE) à l'appareil de télécommunication (ETKG).

20. Centre de services de messages multimédias selon la revendication 15, **caractérisé en ce que** le message d'information (MN) est inséré dans un message court (KN) qui se présente sous la forme d'un message « Short Message Service » et le centre de services de messages multimédias (MMNDZ) est relié à un centre de services de messages courts (KNDZ) pour, sur ordre du centre de services de messages multimédias (MMNDZ), envoyer le message court (KN) d'un centre de services de messages courts (KNDZ) à l'appareil de télécommunication (ETKG).

21. Centre de services de messages multimédias selon la revendication 15, **caractérisé en ce que** le message d'information (MN) est inséré dans un message de pousser « Wireless Application Protocol » et le message de pousser « Wireless Application Protocol », dans un message court (KN) qui se présente sous la forme d'un message « Short Message Service » et le centre de services de messages multimédias (MMNDZ) est relié à un centre de services de messages courts (KNDZ) pour, sur ordre du centre de services de messages multimédias (MMNDZ), envoyer le message court (KN) d'un centre de services de messages courts (KNDZ) à l'appareil de télécommunication (ETKG).

22. Centre de services de messages multimédias selon la revendication 20 ou 21, **caractérisé en ce que** le dispositif émetteur récepteur (SEE) est aménagé pour ordonner au centre de services de messages courts (KNDZ), par l'intermédiaire du centre de services de messages multimédias (MMNDZ), d'envoyer le message d'information (MN) du centre de services de messages multimédias (MMNDZ) au centre de services de messages courts (KNDZ).

23. Centre de services de messages multimédias selon la revendication 15, **caractérisé en ce que** le dispositif émetteur récepteur (SEE) est aménagé pour transmettre le message d'information (MN) par signalisation en bande.

24. Centre de services de messages multimédias selon la revendication 23, **caractérisé en ce que** le dispositif émetteur récepteur (SEE) est aménagé pour réaliser la signalisation en bande par une transmission FSK ou une transmission DTMF.

25. Centre de services de messages multimédias selon la revendication 15, **caractérisé en ce que** le dispositif émetteur récepteur (SEE) est aménagé pour réaliser la session d'information (IS) selon un protocole de modem ou un protocole de fax.

26. Centre de services de messages multimédias selon la revendication 15, **caractérisé en ce que** le noeud d'accès (EWK) est aménagé pour réaliser la session de récupération (AS) conformément à un protocole TCP/IP, un protocole WSP, un protocole de modem ou un protocole de fax.

27. Centre de services de messages multimédias selon la revendication 15, **caractérisé en ce que** le message multimédia (MMN) comporte des données audio, vidéo et/ou textuelles.

28. Appareil de télécommunication pour accéder à des messages multimédias déposés en un point de dépôt d'un centre de services de messages multimédias, lequel comporte :
a) un dispositif de commande central (ZSTE) pour commander les déroulements de commandes et de fonctions dans l'appareil de télécommunication (ETKG) ;
b) un dispositif de récupération (AHE) pour récupérer des messages et/ou informations, lequel est relié au dispositif de commande centrale (ZSTE) ;
c) un émetteur-récepteur (SEM) pour émettre et recevoir des messages, lequel reçoit un message d'information (MN) envoyé directement ou indirectmeent du centre de services de messages multimédias (MMNDZ) à l'appareil de télécommunication (ETKG), est relié au dispositif de commande central (ZSTE) et retransmet le message d'information (MN) au dispositif de commande central (ZSTE) pour informer l'appareil de télécommunications (ETKG) d'un message multimédia (MMN) déposé dans le centre de services de messages multimédias (MMNDZ) pour l'appareil de télécommunication (ETKG),
c1) l'émetteur récepteur (SEM) est, pour la réception du message d'information (MN) transmis par le centre de services de messages multimédias (MMNDZ) pendant une session d'information (IS), relié, directement ou indirectement, au centre de services de messages multimédias (MMNDZ) via une liaison de canal utile (NKV) établie par le centre de services de messages multimédias (MMNDZ) ; et
c2) la session d'information (IS) se termine avec la transmission du message d'information (MN),
**caractérisé en ce que**
d) sont présents des moyens d'évaluation (AWM) associés au dispositif de commande central (ZSTE), lesquels sont aménagés pour évaluer le message d'information (MN) reçu par l'émetteur récepteur (SEM) via la liaison de canal utile (NKV) et retransmis au dispositif de commande central (ZSTE) ;
e) le dispositif de récupération (AHE) et le dispositif de commande central (ZSTE) constituent, avec les moyens d'évaluation (AWM) associés, une unité fonctionnelle qui est réalisée de manière telle que la liaison de canal utile (NKV) établie vers l'appareil de télécommunication (ETKG) reste établis au moins jusqu'à ce que les moyens d'évaluation (AWM) aient évalué le message d'information (MN) reçu et jusqu'à ce que le dispositif de commande central (ZSTE), conformément au message d'information (MN) évalué, ait récupéré, via le dispositif de récupération (AHE), dans le cadre d'une session de récupération (AS), le contenu du message multimédia (MMN) destiné à l'appareil de télécommunication (ETKG) auprès du centre de services de messages multimédias (MMNDZ) via la liaison de canal utile (NKV).

29. Appareil de télécommunication selon la revendication 28, **caractérisé en ce que** l'émetteur récepteur (SEM), le dispositif de récupération (AHE) et le dispositif de commande central (ZSTE) avec les moyens d'évaluation (AWM) associés sont aménagés pour que le dispositif de récupération (AHE), lorsqu'il est signalé à l'appareil de télécommunication (ETKG), pendant la session d'information (IS), que la liaison de canal utile (NKV) reste établie pour un temps prédéterminé qui suffit pour l'évaluation du message d'information (MN) et pour la durée de la session de récupération (AS), soit activé directement par le dispositif de commande central (ZSTE) sans établir une liaison de canal utile séparée.

30. Appareil de télécommunication selon la revendication 29, **caractérisé en ce que** les moyens d'évaluation (AWM) associés au dispositif de commande central (ZSTE) sont aménagés pour, pendant la signalisation :
a) reconnaître et évaluer un élément d'information spécial (IE) d'un conteneur d'éléments d'information utilisé pour la transmission du message d'information, lequel élément d'information spécial est transmis par le centre de services de messages multimédias (MMNDZ) avec le message d'information (MN) ; ou
b) reconnaître et évaluer un message séparé (MD) transmis par le centre de services de messages multimédias (MMNDZ) séparément du message d'information (MN).

31. Appareil de télécommunication selon la revendication 28, **caractérisé en ce que** l'émetteur récepteur (SEM) est aménagé pour signaler au centre de services de messages multimédias (MMNDZ), pendant la session d'information (IS), que la liaison de canal utile (NKV) doit rester établie pour un temps prédéterminé qui suffit pour l'évaluation du message d'information (MN) et pour la durée de la session de récupération (AS).

32. Appareil de télécommunication selon la revendication 31, **caractérisé en ce que** l'émetteur récepteur (SEM) est aménagé pour réaliser, pendant la signalisation, un échange de messages (MA) entre l'appareil de télécommunication (ETKG) et le centre de services de messages multimédias (MMNDZ) avec un message de requête (AM) envoyé par l'émetteur récepteur (SEM) au centre de services de messages multimédias (MMNDZ) et un message de confirmation (BM) envoyé par le centre de services de messages multimédias (MMNDZ) et reçu par l'émetteur récepteur (SEM).

33. Appareil de télécommunication selon la revendication 28, 29 ou 31, **caractérisé en ce que** le dispositif de commande central (ZSTE) est aménagé pour couper, via l'émetteur récepteur (SEM), la liaison de canal utile (NKV) établie si l'appareil de télécommunication (ETKG) envisage de ne pas commencer de cession de récupération (AS) pendant le temps pendant lequel la liaison de canal utile (NKV) est établie.

34. Appareil de télécommunication selon la revendication 28, **caractérisé en ce que** le message d'information (MN) est inséré dans un message court (KN) qui se présente sous la forme d'un message « Short Message Service » et l'appareil de télécommunication (ETKG) est relié à un centre de services de messages courts (KNDZ) qui, sur ordre du centre de services de messages multimédias (MMNDZ), envoie le message court (KN) à l'appareil de télécommunication (ETKG).

35. Appareil de télécommunication selon la revendication 28, **caractérisé en ce que** le message d'information (MN) est inséré dans un message de pousser « Wireless Application Protocol » et le message de pousser « Wireless Application Protocol », dans un message court (KN) qui se présente sous la forme d'un message « Short Message Service », et l'appareil de télécommunication (ETKG) est relié à un centre de services de messages courts (KNDZ) pour, sur ordre du centre de services de messages multimédias (MMNDZ), envoyer le message court (KN) à l'appareil de télécommunication (ETKG).

36. Appareil de télécommunication selon la revendication 28, **caractérisé en ce que** l'émetteur récepteur (SEM) est aménagé pour transmettre le message d'information (MN) par signalisation en bande.

37. Appareil de télécommunication selon la revendication 36, **caractérisé en ce que** l'émetteur récepteur (SEM) est aménagé pour réaliser la signalisation en bande par une transmission FSK ou une transmission DTMF.

38. Appareil de télécommunication selon la revendication 28, **caractérisé en ce que** l'émetteur récepteur (SEM) est aménagé pour réaliser la session d'information (IS) conformément à un protocole de modem ou un protocole fax.

39. Appareil de télécommunication selon la revendication 28, **caractérisé en ce que** le dispositif de récupération (AHE) est aménagé pour réaliser la session de récupération (AS) conformément à un protocole TCP/IP, un protocole WSP, un protocole de modem, un protocole PPP ou un protocole de fax.

40. Appareil de télécommunication selon la revendication 28, **caractérisé en ce que** l'appareil de télécommunication (ETKG) est un appareil de réseau fixe ou radio mobile, et plus particulièrement une partie mobile sans fil, un ordinateur personnel ou un fax.

41. Appareil de télécommunication selon la revendication 28, **caractérisé en ce que** le message multimédia (MMN) comporte des données audio, vidéo et/ou textuelles.
